# EUROPÄISCHE PATENTSCHRIFT

(11) **EP 3 822 991 B1**
(45) Veröffentlichungstag und Bekanntmachung des Hinweises auf die Patenterteilung: **27.12.2023**
(21) Anmeldenummer: 19208629.6
(22) Anmeldetag: 12.11.2019
(51) Int. Cl.: H01F 1/057, H01F 41/02, H02K 15/03

(54) **VERFAHREN UND VORRICHTUNG ZUR HERSTELLUNG ROTATIONSSYMMETRISCHER PERMANENTMAGNETE**
METHOD AND DEVICE FOR PRODUCING ROTATIONALLY SYMMETRICAL PERMANENT MAGNETS
PROCÉDÉ ET DISPOSITIF DE FABRICATION D'AIMANTS PERMANENTS SYMÉTRIQUES EN ROTATION

(43) Veröffentlichungstag der Anmeldung: 19.05.2021
(73) Patentinhaber: WILO SE, 44263 Dortmund (DE)
(72) Erfinder: Krengel, Martin, 44263 Dortmund (DE)
(74) Vertreter: Cohausz Hannig Borkowski Wißgott

(56) Entgegenhaltungen:
- EP-A1- 3 334 012
- JP-A- H01 169 910
- JP-A- 2018 195 617
- US-A- 5 062 095
- US-A1- 2006 042 342

## Beschreibung

Die Erfindung betrifft ein Verfahren und eine Vorrichtung zur Herstellung eines rotationssymmetrischen, insbesondere ringförmigen Permanentmagneten mit radial vorzugsgerichteter Magnetisierung durch Fließpressen eines Rohlings aus Magnetmaterial. Im Besonderen betrifft die Erfindung die Herstellung ringförmiger Permanentmagnete für Rotoren elektrischer Maschinen, insbesondere für Elektromotoren.

US 5 062 095 A und US 2006/042342 A1 beschreiben Methoden zur Herstellung von ringförmigen Permanentmagneten mit radialer Magnetisierung.

Bei ringförmigen Permanentmagneten mit radialer Magnetisierung verlaufen die Magnetfeldlinien radial zur Längsachse. Eine solche Magnetisierung ist durch klassisches Sintern nur schlecht zu erreichen. Beim Sintern wird ein feinkörniges Magnetpulver unter hohem Druck zu einem Pulverpressling, auch Grünling genannt, gepresst. Durch den Druck wird das Magnetpulver nur verdichtet, wobei Luft aus den Porenräumen zwischen den Pulverpartikeln entweicht. Dabei reduziert sich das Volumen des Ausgangsmaterials. Anschließend wird der Grünling in einem Sinterofen bei hoher Temperatur, allerdings unterhalb der Schmelztemperatur der Hauptkomponenten des Magnetmaterials erhitzt. Der Grünling wird dadurch zu einem festen Körper. Zum Teil kann es, je nach Temperatur, an der Oberfläche der Körner zu einer partiellen Schmelze kommen, so dass die Oberflächen der Körner miteinander verbacken, was zu einer weiteren Volumenverringerung führt, die auch als Schwindung bezeichnet wird. Der so hergestellte gesinterte Rohling wird anschließend mechanisch bearbeitet, beispielsweis geschliffen, um ihn in eine gewünschte Form zu bringen.

Während des Pressens des Magnetpulvers muss ein starkes externes elektromagnetisches Feld angelegt werden, um die Pulverpartikel mit ihren magnetischen Momenten, auch Weiß'sche Bezirke genannt, bzw. die Kristallachsen der Einheitszellen in der Kristallstruktur des ferromagnetischen Magnetmaterials auszurichten. Dieses Magnetfeld müsste zum Erhalt einer rein radial orientierten Magnetisierung bei ringförmigen Permanentmagneten notwendigerweise ebenfalls radial sein. D. h. es müssten während des Pressens Magnetpole im Inneren und außerhalb des herzustellenden Ringmagneten erzeugt werden. Dies ist technisch nicht oder nur in sehr beschränktem Umfang möglich, insbesondere wenn die Ringmagnete klein und lang sind, beispielsweise einen Außendurchmesser von weniger als 30mm haben. Zum Erhalt einer radialen Magnetisierung bedient man sich dem Prinzip der Feldverdrängung. Hierzu werden zwei, sich axial gegenüberliegende Ringspulen mit identischen, zueinander gerichteten Polen verwendet, zwischen denen das zu pressende Magnetmaterial liegt. Da sich identische Pole abstoßen und die Magnetfelder gegenseitig verdrängen, verläuft das Magnetfeld radial durch den Pulverring.

Ein Nachteil dieses Vorgehens ist allerdings die Tatsache, dass nur Ringmagnete mit geringer radialer Dicke und geringer axialer Höhe hergestellt werden können, weil die Fernwirkung des externen elektromagnetischen Feldes gering ist. Andererseits ist zu beachten, dass gesinterte Magnete zur Rissbildung neigen, weil die Schwindung in Richtung verschiedener Kristallachsen der Einheitszelle im Kristallgefüge des Magnetpulvers unterschiedlich ist. So unterscheidet sich die Schwindung in Richtung der magnetischen Vorzugsachse von der Schwindung in Richtung quer hierzu, weil die Achsen unterschiedlich lang sind. Gesinterte Magnetringe stehen deshalb stark unter Spannung, weshalb viel Ausschuss entsteht. Um dies zu vermeiden, darf die radiale Dicke der Magnetringe nicht zu gering sein. In der Praxis sind deshalb der Dicke der Magnetringe sowohl nach oben als auch nach unten erhebliche Grenzen gesetzt.

Die genannten Probleme bei der Herstellung von Magnetringen mit radial orientierter Magnetisierung im Sinterverfahren wurden in der Vergangenheit durch einen anderen Herstellungsprozess gelöst, nämlich durch ein Heißpressverfahren bei hoher Temperatur, bei dem ein Umformen des Magnetmaterials bei hoher Temperatur erfolgt. Durch das Umformen fließt das Magnetmaterial, weshalb das Verfahren auch als Fließpressen bezeichnet wird. Der besondere Vorteil dieses Verfahrens besteht darin, dass sich durch den Druck und das Fließen die Kristallachsen des Magnetmaterials ausrichten, nämlich derart, dass sich die magnetische Vorzugsrichtung senkrecht zur Fließrichtung ausbildet. Somit wird beim Heißpressen kein Magnetfeld benötigt. Die Vorzugsrichtung ist die Richtung der magnetischen Momente. Sie entspricht der Richtung der Hauptkristallachse im Kristallgitter ferromagnetischen Materials, auch c-Achse oder Achse der leichten Magnetisierung genannt. Sie ist die längste Kristallachse und richtet sich unter Druck und durch die Materialverformung senkrecht zur Fließrichtung aus.

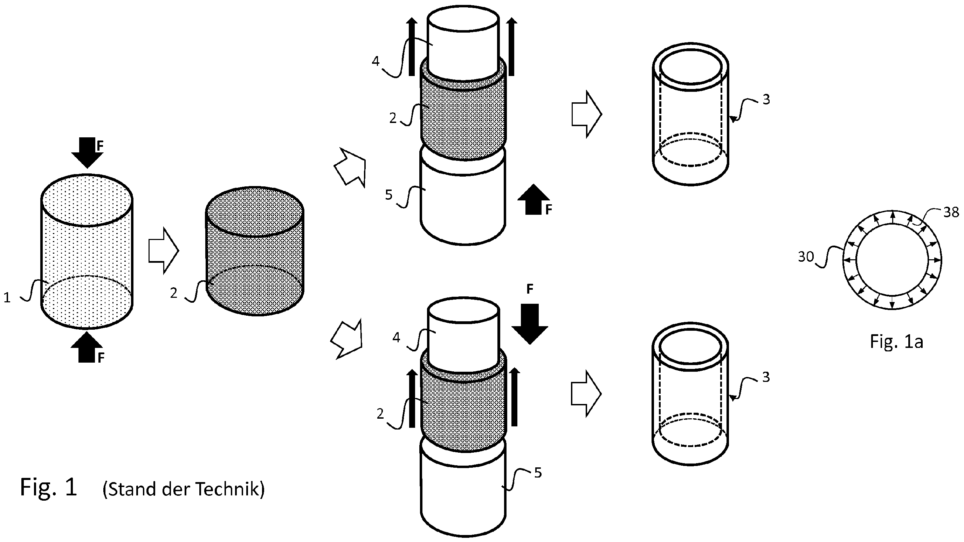

Wie Fig. 1 veranschaulicht, wird zur Herstellung ringförmiger Permanentmagnete 30 mit radialer Vorzugsorientierung, d.h. radialer Magnetisierung 38 entlang der Vorzugsrichtung (vgl. Fig. 1 a)das Magnetmaterial folglich so umgeformt, dass es in axialer Richtung fließt. Dies ist durch ein sogenanntes Vorwärtsfließpressen oder durch ein Rückwärtsfließpressen möglich. Beim Vorwärtsfließpressen ist die Bewegungsrichtung des Pressstempels zur Fließrichtung des Materials gleichgerichtet, während beim Rückwärtsfließpressen Pressrichtung und Fließrichtung entgegengesetzt sind. Dies veranschaulicht Fig. 1, in der ein durch Verdichten feinkörnigen Magnetpulvers hergestellter Pulverpressling 1 zunächst axial heißgepresst, d.h. bei einer hohen Temperatur von beispielsweise ca. 800°C gepresst wird (Pfeile F), so dass ein Rohling 2 entsteht, welcher anschließend durch Heißfließpressen, beispielsweise ebenfalls bei ca. 800°C, in eine ringförmige Endform 3 umgeformt wird.

Das Vorwärtsfließpressen wird dadurch erreicht, dass ein Pressstempel, in Fig. 1 oben Mitte Unterstempel 5, den Rohling 2 innerhalb einer Pressform (nicht dargestellt) axial gegen einen anderen, im Durchmesser schmaleren Pressstempel, in Fig. 1 oben Mitte Oberstempel 4, drückt, so dass das Material axial an diesem schmaleren Pressstempel 4 vorbeifließt. Durch fortschreitende Bewegung des Unterstempels 5 zum Oberstempel 4 wird das Material des Rohlings 2 vom Unterstempel 5 in einen radialen Spalt zwischen Oberstempel 4 und Pressform gedrückt, der der gewünschten Dicke des herzustellenden Ringmagneten 30 entspricht, siehe Fig. 1a.

Das Rückwärtsfließpressen wird dadurch erreicht, dass ein Pressstempel, in Fig. 1 Oberstempel 5, den Rohling 2 innerhalb einer Pressform (nicht dargestellt) axial gegen einen anderen, im Durchmesser breiteren Pressstempel, in Fig. 1 Unterstempel 5, drückt, so dass das Material entgegengesetzt axial an dem schmaleren Pressstempel 4 zurückfließt bzw. aufsteigt, siehe Fig. 1 mittleres Bild unten. Es wird somit durch fortschreitende Bewegung des Oberstempels 4 zum Unterstempel 5 das Material des Rohlings 2 vom Oberstempel 4 in den radialen Spalt zwischen Oberstempel 4 und Pressform gedrückt, der der gewünschten Dicke des herzustellenden Ringmagneten 30 entspricht, siehe Fig. 1a.

Der Rohling 2 ist für das Vorwärts- oder Rückwärtsfließpressen massiv in Form eines runden Zylinders, so dass die Endform 3 topfförmig wird. Die Endform 3 hat in beiden Fällen im axial mittleren Bereich eine vollständig radiale Magnetisierung 38, wie Fig. 1a zeigt. Das den Topfboden bildende Material ist dagegen kaum geflossen und besitzt somit keine Vorzugsorientierung. Auch hat der obere Rand der ringförmigen Endform 3 keine vollständige radiale Ausrichtung und ist zudem sehr ungleichmäßig geformt. Die axialen Enden der Endform 3 müssen deshalb abgetrennt werden, so dass auch hier beträchtlicher Ausschuss wertvollen Magnetmaterials entsteht.

Es ist deshalb Aufgabe der vorliegenden Erfindung, ein Verfahren und eine Vorrichtung bereitzustellen, die die vorgenannten Nachteile überwindet, insbesondere den Ausschuss bei der Herstellung rotationssymmetrischer, insbesondere ringförmiger Permanentmagnete mit radialer Magnetisierung minimiert. Ebenso ist es Aufgabe der Erfindung, einen Rohling zur Verwendung in dem Verfahren und in der Vorrichtung bereitzustellen.

Diese Aufgabe werden durch ein Verfahren mit den Merkmalen des Anspruchs 1 und eine Pressvorrichtung mit den Merkmalen des Anspruchs 15 sowie einen Rohling nach Anspruch 26 gelöst. Vorteilhafte Weiterbildungen sind in den Unteransprüchen angegeben und werden nachfolgend beschrieben.

Erfindungsgemäß wird ein Verfahren zur Herstellung eines rotationssymmetrischen, insbesondere ringförmigen Permanentmagneten mit radial vorzugsgerichteter Magnetisierung durch Fließpressen eines Rohlings aus Magnetmaterial vorgeschlagen, bei dem das Fließpressen quer zur Rohlingachse erfolgt, indem Querstempel Vorsprünge des Rohlings derart verformen, dass das die Vorsprünge bildende Materialvolumen in Umfangsrichtung fließt. Außerdem wird eine Pressvorrichtung zur Durchführung des Verfahrens vorgeschlagen, aufweisend quer zur Rohlingachse bewegliche Querstempel, wobei die Pressvorrichtung eingerichtet ist, Vorsprünge des Rohlings durch die Bewegung der Querstempel derart zu verformen, dass das die Vorsprünge bildende Materialvolumen in Umfangsrichtung fließt.

Durch das Fließpressen in Umfangsrichtung richten sich die Hauptkristallachsen (c-Achse) und damit die magnetischen Momente des Materials senkrecht zur Fließrichtung und parallel zur Pressrichtung aus. Ein Großteil der magnetischen Momente ist anschließend über die gesamte axiale Länge der Endform radial orientiert, so dass kein Magnetmaterial (Topfboden und Rand) an den Axialenden des fließgepressten Rohlings abgeschnitten werden muss. Zur Herstellung eines Ringmagneten wird dadurch insgesamt weniger Magnetmaterial benötigt. Da das Pressen quer zur Rohlingachse erfolgt, kann von einem Transversalpressverfahren gesprochen werden.

Vorzugsweise erfolgt das Fließpressen bei einer Temperatur zwischen 750°C und 900°C und kann daher als Warm- oder Heißfließpressen bezeichnet werden. Dies erleichtert die Umformung und das Fließen des Magnetmaterials.

Das Verfahren ist nicht nur zur Herstellung ringförmiger Permanentmagnete, d.h. in Form eines Hohlkörpers, geeignet. Vielmehr können auch Permanentmagnete in Form eines massiven Körpers hergestellt werden, der nur in einem ringförmigen Außenbereich die radial vorzugsgerichtete Magnetisierung aufweist. Ein solch massiver Permanentmagnet kann beispielsweise als Sensormagnet verwendet werden.

Der herzustellende Permanentmagnet kann bevorzugt zylindrisch sein, d.h. einen konstanten Querschnitt entlang seiner Achse aufweisen. Beispielsweise ist dieser Querschnitt kreisförmig. Er kann jedoch auch beliebig anders geformt sein, beispielsweise im Querschnitt ein Oval, Viereck, Fünfeck, Sechseck oder beliebiges Vieleck bilden. Das erfindungsgemäßen Verfahren ermöglicht in gleicher Weise die Herstellung von Permanentmagnet, deren Außenkontur sich entlang der Achse ändert. So können auch konische Permanentmagnet, insbesondere konische Ringmagnete hergestellt werden. Eine konische Außenkontur ist beispielsweise zur Befestigung des Permanentmagneten hilfreich, beispielsweise in einer Außenrotoranwendung, bei dem ein ringförmiger Permanentmagnet Teil eines Rotors ist, der um einen innenliegenden Stator dreht. Durch die konische Außenkontur kann der Permanentmagnet in einem Trägerring befestigt werden.

Ganz allgemein kann der herzustellende Permanentmagnet, insbesondere der Ringmagnet, rotationssymmetrisch oder n-zählig drehsymmetrisch zu seiner Achse sein.

Im Gegensatz zum Stand der Technik gemäß Fig. 1 besitzen der Rohling und die durch das Fließpressen erzeugte Endform unterschiedliche Außengeometrien. Vorteilhafterweise entspricht die Endform sogleich auch der Form des herzustellenden Permanentmagneten, so dass kein weiterer Umformschritt erforderlich ist. Die Querstempel definieren dann direkt die Endform bzw. die Außenkontur des herzustellenden Permanentmagneten.

Die Außenkontur des Rohlings kann im Querschnitt zylindrisch oder konisch sein. Idealerweise bildet der Rohling einen Hohlkörper, vorzugsweise einen zylindrischen Hohlkörper. Er ist somit nicht massiv, sondern ringförmig, so dass kein Material aus dem Inneren verdrängt werden muss, um einen Ringmagneten herzustellen. Zum Erreichen der Endform bedarf es lediglich eine Umformung der Außenkontur des Rohlings. Es erstreckt sich dann ein Hohlraum, vorzugsweise koaxial zur Rohlingachse durch den Rohling. Die Vorsprünge stehen dann von einem zentralen Ring des Rohlings ab, vorzugsweise im Wesentlichen radial. Der Hohlraum besitzt eine Innenkontur, die bevorzugt zylindrisch sein kann. Sie kann alternativ konisch sein, beispielsweise um die Entformung zu erleichtern. Der Hohlraum kann eine Welle aufnehmen, nachfolgend Mittelstift genannt, zu der der Rohling relativ axial bewegt werden kann.

In einer Ausführungsvariante ist der Querschnitt des Hohlraums kreisförmig, was eine Drehbewegung des Rohlings relativ zur Welle zulässt. Er kann gemäß einer anderen Ausführungsvariante jedoch von der Kreisform abweichen, beispielsweise ein Oval, Viereck, Fünfeck, Sechseck oder beliebiges Vieleck bilden oder schlicht eine Abflachung aufweisen. Dies ermöglicht in Umfangsrichtung einen Formschluss, so dass der Rohling nicht relativ zur Welle gedreht werden kann. Obgleich die Innenkontur unabhängig von der Außenkontur des Rohlings gewählt werden kann, ist es prozesstechnisch sinnvoll, wenn beide Konturen zylindrisch sind, der Rohling also insgesamt einen Zylinder bildet.

In einer Ausführungsvariante weist der Rohling vier Vorsprünge auf. Es können jedoch auch mehr oder weniger als vier Vorsprünge vorhanden sein. Je mehr Vorsprünge vorliegen, desto kürzer sind die Fließwege, so dass nicht zu viele Vorsprünge bei dem Rohling vorgesehen werden sollten. Gleichwohl kommt es auf den Durchmesser des herzustellenden Permanentmagneten an. So können bei Permanentmagneten mit größerem Durchmesser mehr Vorsprünge vorgesehen sein, als bei Permanentmagneten mit kleinerem Durchmesser, da sich bei Vergrößerung des Durchmessers auch die Fließwege in Umfangsrichtung vergrößern. Die Anzahl der Vorsprünge ist deshalb geeigneterweise an der Größe des herzustellenden Ringmagneten zu orientieren.

Des Weiteren ist zu beachten, dass die radial vorzugsgerichtete Magnetisierung aufgrund der unterschiedlich weit fließenden Volumenelemente des Magnetmaterials nicht über den gesamten Umfang homogen ist. Die äußersten Seitenvolumina der Vorsprünge fließen bei der Verformung zunächst in Umfangsrichtung und treffen jeweils mittig zwischen zwei Vorsprüngen auf das fließende Seitenvolumen des benachbarten Vorsprungs, wobei sich die Materialvolumen anstauen und durch das nachfließende Material radial gegen die Werkzeugwand bzw. die Pressfläche der Querstempel gedrückt werden. Infolgedessen ist die gewünschte radiale magnetische Ausrichtung in dem mittleren Bereich zwischen zwei ehemaligen Vorsprüngen etwas schlechter als dort, wo zuvor die Vorsprünge waren. Es empfiehlt sich, diese mittleren Bereiche zwischen zwei ehemaligen Vorsprüngen dafür vorzusehen, dass das Magnetfeld dort einen magnetischen Nulldurchgang von einem Nord- zum Südpol, d.h. eine Pollücke aufweist und dass die magnetischen Pole des Feldes auf den ehemaligen Vorsprüngen liegen. In diesem Fall entspricht folglich die Anzahl der Vorsprünge der Anzahl der Pole. Es ist deshalb sinnvoll, die Anzahl der Vorsprünge des Rohlings gemäß der Anzahl der gewünschten Magnetpole zu wählen.

Idealerweise sind die Vorsprünge gleichmäßig über den Umfang des Rohlings verteilt, so dass die Umformkräfte der Querstempel gleichmäßig wirken und der Materialfluss über den Umfang gleichmäßig ist.

Der Querschnitt eines Vorsprungs kann in einer Ausführungsvariante blockförmig sein. Dies hat den Vorteil, dass keine abbrechbaren spitzen Ecken vorliegen, und der Rohling gut handhabbar ist, vor allem, wenn der Rohling aus einem empfindlichen Pulverpressling gleichen Querschnitts hergestellt ist. Bei vier symmetrisch angeordneten blockförmigen Vorsprüngen besitzt der Rohling insgesamt eine kreuzförmige zylindrische Außenkontur. Alternativ kann der Querschnitt eines Vorsprungs beispielsweise halbkreisförmig oder trapezförmig sein, oder die Form einer Ellipsenhälfte haben. Bevorzugt haben alle Vorsprünge einen identischen Querschnitt, insbesondere einen symmetrischen Querschnitt, so dass beim Umformen jeweils die Hälfe des Materialvolumens nach rechts und links fließt. In einer Ausführungsvariante kann ein Vorsprung auch einen unsymmetrischen Querschnitt besitzen. Eine solche Variante bietet sich an, wenn in eine Umfangsrichtung mehr Material fließen soll, als in die andere Umfangsrichtung.

In einer Ausführungsvariante können die Vorsprünge eine konvex-bogenförmige Außenkontur aufweisen. Hierdurch wird erreicht, dass die Mitte der Vorsprünge gleich zu Beginn des Pressvorgangs jeweils an einer konkav-bogenförmigen Pressfläche der Querstempel anliegt und das Materialvolumen von der Umfangsmitte aus gleichmäßig zu den Seiten gedrückt wird. Dies vermeidet eine falsche Fließrichtung, die beispielsweise dann gegeben ist, wenn die Außenkontur eines Vorsprungs im Querschnitt eine Gerade bildet, so dass nur die Kanten der Vorsprünge die Pressfläche berühren und im Übrigen ein Spalt zwischen Vorsprung und Pressfläche besteht, so dass beim Querpressen ein Seitenvolumen der Vorsprünge zunächst in die Mitte fließt, um den Spalt auszufüllen, bevor es dann wieder in entgegengesetzte Umfangsrichtung fließt. Die konvex-bogenförmige Außenkontur der Vorsprünge stellt somit eine korrekte Fließrichtung sicher und gewährleistet damit eine radial vorzugsgerichtete Magnetisierung.

In einer Ausführungsvariante kann das Fließpressen radial bezogen auf die Rohlingachse erfolgen. Dies bedeutet, dass die Hauptbewegungsrichtung der Querstempel und damit die Kraftrichtung auf die Rohlingachse gerichtet ist und das die Vorsprünge bildende Materialvolumen quer zur Bewegungsrichtung der Querstempel fließt. Hierdurch wird ein besonders einfacher Aufbau der Pressvorrichtung erreicht.

Über
- die Querschnittsform der Vorsprünge, die bevorzugt symmetrisch, allerdings auch unsymmetrisch sein kann, und/ oder
- die Innenkontur der Pressfläche der Querstempel, die bevorzugt ebenfalls symmetrisch, jedoch ebenfalls auch unsymmetrisch sein kann, und/ oder
- die Bewegungsrichtung der Querstempel, die bevorzugt radial, alternativ sekantial, sowie im einfachsten Fall linear, alternativ jedoch auch entlang einer gekrümmten Bahn (ähnlich wie die Lamellen bei einer Irisblende) erfolgen kann,
ist es möglich, den Materialfluss zu beeinflussen, insbesondere zu definieren, welche Menge an Magnetmaterial in welche Umfangsrichtung fließen soll. Sekantial bedeutet, dass die Hauptbewegungsrichtung der Querstempel parallel zu einem Radius liegt, d.h. quasi in Richtung an der Rohlingachse vorbei gerichtet ist. Eine symmetrische Querschnittsform der Vorsprünge in Verbindung mit einer Symmetrischen Innenkontur der Pressflächen führt dazu, dass das die Vorsprünge bildende Materialvolumen gleichmäßig in beide Umfangsrichtungen fließt. Der Materialfluss kann jedoch alterativ durch die o.g. Maßnahmen auf die beiden Umfangsrichtungen anders aufgeteilt werden.

Wie bereits in Bezug zur Wahl der Anzahl der Vorsprünge angemerkt, ist die Vorzugsorientierung in demjenigen Bereich, der zuvor zwischen zwei Vorsprüngen lag, weniger stark ausgeprägt, als dort, wo der Vorsprung vor dem Fließpressen war. Es ist deshalb von Vorteil, der Endform die Magnetpole (Nord, Süd) so aufzuprägen, dass der Übergang von einem Pol (z.B. Nordpol) zum anderen Pol (z.B. Südpol), d.h. die Pollücke, zwischen zwei ehemaligen Vorsprüngen liegt. Dies kann dadurch erfolgen, dass der fließgepresste Rohling einem elektromagnetischen Feld ausgesetzt wird, während seine Winkelausrichtung relativ zum Feld derart ist, dass die magnetischen Pole des Feldes auf den ehemaligen Vorsprüngen liegen.

Der Rohling kann aus einem Pulverpressling hergestellt sein, wie dies im Stand der Technik an sich bekannt ist. Der Pulverpressling besteht dabei aus verdichtetem pulvrigem Magnetmaterial und wird auch als Grünling bezeichnet. Durch das Verdichten werden Hohlräume im Magnetpulver reduziert, so dass sich das Volumen einer bestimmten Masse an Magnetpulver verringert. Im Pulverpressling haben die Pulverpartikel jedoch keinen Stoffschluss zueinander, so dass geringe Handkraft den Pulverpressling wieder zu Pulver werden lässt. Gleichwohl vereinfacht der Pulverpressling das Portionieren der Magnetpulvermengen.

Es ist grundsätzlich möglich, den erfindungsgemäßen Rohling mit seinen Vorsprüngen aus einem beliebig geformten Pulverpressling durch entsprechendes Formpressen herzustellen, so dass der Rohling und der Pulverpressling nicht zwingend dieselbe Außenkontur aufweisen müssen. Ein besonders einfacher Aufbau der Vorrichtung zur Herstellung des Rohlings wird jedoch erreicht, wenn der Pulverpressling einen identischen Querschnitt wie der Rohling aufweist. In diesem Fall besitzt auch der Pulverpressling die zuvor beschriebenen Vorsprünge sowie eine Außenkontur entsprechend dem Rohling, vorzugsweise auch einen inneren Hohlraum,. Der Rohling kann dann ohne zusätzliche Formgebung, d.h. durch rein axiales Pressen des Pulverpresslings erzeugt werden. Diese unterscheiden sich dann lediglich in ihrer axialen Länge, weil das axiale Pressen zu einem Volumenverlust führt.

Besonders vorteilhaft ist es, wenn das Axialpressen des Pulverpresslings und das Querpressen (Fließpressen) des Rohlings auf derselben Vorrichtung durchgeführt werden. Denn in diesem Fall kann Energie eingespart werden, da kein zusätzliches Aufheizen zwischen den beiden Pressschritten erforderlich ist. Ferner wird das Risiko von Spannungsrissen durch Abkühlen von dickwandigen Teilen bzw. Teilen mit großen Wandstärkeunterschieden vermieden. Ferner wird auch die Oxidation verringert, da kein Transport heißer Rohlinge von einer Pressvorrichtung zur anderen erfolgen muss.

In einer Ausführungsvariante kann die Pressvorrichtung eine Pressform und einen darin geführten Ober- und Unterstempel aufweisen, die relativ zueinander axial beweglich sind bzw. bewegt werden, um den Rohling durch axiales Pressen in der Pressform aus dem Pulverpressling herzustellen. Der Pulverpressling ist/ wird hierfür zwischen dem Ober- und Unterstempel angeordnet. Somit können die axialen Stirnflächen der Stempel gegen jeweils ein Axialende des Pulverpresslings drücken und die Pressflächen bilden. Es bedarf dann keiner speziell vorgesehenen Pressfläche, wie dies beispielsweise beim Querstempel der Fall ist. Ober- und Unterstempel sind vorzugsweise unabhängig voneinander beweglich. Für das axiale Pressen kann der Unterstempel gegen den Oberstempel, der Ober- gegen den Unterstempel oder beide Stempel gegeneinander drücken, wobei sich der die Kraft aufbringende Stempel bewegt, um der Volumenverringerung des Pulverpresslings zu folgen.

Gemäß einer Ausführungsvariante besitzt nur einer der beiden Stempel, insbesondere der sich beim Pressen bewegende Stempel, zumindest an demjenigen axialen Ende, das die Pressfläche bildet, denselben Querschnitt wie der Pulverpressling bzw. wie der Rohling. Vorzugsweise besitzen beide Stempel denselben Querschnitt, wie der Pulverpressling bzw. wie der Rohling. Der Ober- und/ oder Unterstempel weist! weisen somit an seinem/ ihrem die Pressfläche bildenden Axialende in der Anzahl und Anordnung identische Vorsprünge wie der der Rohling auf. Der Ober- und/ oder Unterstempel kann/ können profilförmig sein und somit über ihre gesamte axiale Länge den Querschnitt des Pulverpresslings bzw. des Rohlings haben, was die Führung in der Pressform verbessert.

Zur Führung des Ober- und/ oder Unterstempels kann die Pressform eine Längsausnehmung aufweisen, deren Querschnitt im Wesentlichen dem Stempelquerschnitt entspricht, so dass Ober- und/ oder Unterstempel axial beweglich in dieser Längsausnehmung einliegen können. Das axiale Pressen erfolgt in einem Innenraum der Pressform, welcher vorteilhafterweise einem axialen Abschnitt der Längsausnehmung entspricht. Der Innenraum bzw. die Längsausnehmung definiert dann die Außenkontur des Rohlings, da die Pressform ein seitliches Ausweichen des Pulverpresslings verhindert. Hierdurch wird eine besonders kompakte Bauform der Pressvorrichtung erreicht.

In einer Ausführungsvariante kann das axiale Pressen in der Pressvorrichtung, insbesondere in der Pressform, axial versetzt zu den Querstempeln erfolgen. So kann das axiale Pressen auf einer ersten axialen Höhe der Pressvorrichtung, insbesondere der Pressform, erfolgen, wobei der durch das axiale Pressen hergestellte Rohling anschließend auf eine zweite Höhe in der Pressvorrichtung, insbesondere der Pressform verfahrbar ist bzw. verfahren wird, auf der die Querstempel den Rohling quer zur Rohlingachse fließpressen. Der Transportweg für den Rohling ist damit eine einfache Linearbewegung und somit sicher und kurz. Zur Herstellung des Rohlings kann der Pulverpressling in die Pressvorrichtung eingelegt und auf die erste Höhe verfahren werden, um dort den Rohling herzustellen.

Während das axiale Pressen in der genannten Pressform erfolgt, kann für das Fließpressen eine zweite Pressform vorhanden sein, in die der Rohling hineingefahren wird. Bevorzugt finden die beiden Pressschritte aber in derselben Pressform statt, so dass keine separate Pressform erforderlich ist. Hierdurch kann die Pressvorrichtung noch kompakter und einfacher gebaut und der Transportweg für den Rohling weiter minimiert werden. Gemäß einer Ausführungsvariante kann das Axialpressen in einem ersten Abschnitt der Pressform, das Fließpressen in einem zweiten Abschnitt der Pressform erfolgen, wobei die beiden Abschnitte nebeneinander, insbesondere übereinander liegen. Bevorzugt erfolgt das axiale Pressen unterhalb des Fließpressens, d.h. unterhalb der Querstempel. Mit anderen Worten liegt die zweite axiale Höhe oberhalb der ersten axialen Höhe.

Vorteilhafterweise kann der Transport des Rohlings und/ oder des Pulverpresslings innerhalb der Pressvorrichtung, insbesondere innerhalb der Pressform durch den Unterstempel, vorzugsweise gemeinsam durch den Ober- und Unterstempel erfolgen. Alternativ kann hierzu die oben genannte Welle dienen, nachfolgend Mittelstift genannt, sofern der Pulverpressling und/ oder der Rohling ringförmig ist/ sind.

Wie bereits erwähnt, weisen die Querstempel zur Umformung der Vorsprünge an ihrem zum Rohling gerichteten Ende Pressflächen auf, die derart geformt sind, dass sie einen Umfangsabschnitt der Außenkontur der zu erreichenden Endform ausbilden. Beispielsweise können die Pressflächen einen Umfangsabschnitt eines Zylinders, vorzugsweise eines Kreiszylinders bilden.

In einer Ausführungsvariante können die Pressflächen der Querstempel in ihrer Gesamtheit die gesamte Außenkontur der Endform bzw. des herzustellenden Permanentmagneten definieren. Das bedeutet, dass jede Pressfläche einen solchen Umfangsabschnitt der Endform definiert, dass die Gesamtheit der Umfangsabschnitte vollständig der Außenkontur der Endform entspricht. Mit anderen Worten liegen die Querstempel im eingefahrenen Zustand derart nebeneinander, dass die Gesamtheit der Pressflächen die vollständige Außenkontur der Endform definiert. Bei vier Querstempeln definiert somit jede Pressfläche einen 90° Umfangsabschnitt der Endform.

Es ist jedoch in einer anderen Ausführungsvariante auch möglich, dass die Gesamtheit der Pressflächen der Querstempel nur einen Teil der Außenkontur der Endform bzw. des herzustellenden Permanentmagneten definiert, während der übrige Teil der Außenkontur durch stationäre Formabschnitte einer Pressform definiert wird. Beispielsweise kann jeweils zwischen zwei beweglichen Querstempeln ein solcher, stationärer Formabschnitt der Pressform vorhanden sein, so dass in Umfangsrichtung abwechselnd eine Pressfläche und ein Formabschnitt der Pressform einen Umfangsabschnitt der Endform definiert. Mit anderen Worten liegen die Querstempel im eingefahrenen Zustand derart zwischen, insbesondere abwechselnd neben den stationären Formabschnitten der Pressform, dass die Gesamtheit der Pressflächen und Formabschnitte der vollständigen Außenkontur der Endform entspricht. Diese beim Fließpressen mitwirkende Pressform kann eine von der Pressform für das Axialpressen verschiedene Pressform sein, oder lediglich einen anderen axialen Abschnitt der für das Axialpressen verwendeten Pressform bilden.

Vorzugsweise sind die Querstempel in der Pressform beweglich geführt. Die Pressform bildet für die Querstempel somit einerseits eine Führung, andererseits eine Lagerung. Beispielsweise kann die Pressform quer zur Längspressachse, insbesondere quer zur oben genannten Längsausnehmung für den Ober- und Unterstempel verlaufende Öffnungen haben, durch die sich die Querstempel längsverschieblich zur Mitte der Pressform hindurcherstrecken.

Die Pressform kann einteilig aufgebaut sein. Zu Reinigungs-, Wartungs- und Reparaturzwecken ist es jedoch vorteilhaft, die Pressform zwei- oder mehrteilig auszubilden. So kann sie bevorzugt aus einem Ober- und einem Unterteil bestehen, deren Trennebene idealerweise durch die Öffnungen verläuft. Durch die Abnahme des Oberteils sind dann die Querstempel zugänglich. Dies erleichtert die Montage der Vorrichtung, sowie die Wartung zum Zwecke der Reinigung, die Reparatur, wenn einer der Stempel in der Pressform festhängt oder verschleißbedingt ausgewechselt werden muss, oder den Umbau, wenn zum Erhalt einer anderen Außenkontur (Form und/ oder Größe) die Querstempel ausgetauscht werden müssen.

In einer Ausführungsvariante können der Rohling und der Ober- und/ oder Unterstempel vor dem Fließpressen relativ zueinander derart positioniert werden, dass der Rohling am Oberstempel und am Unterstempel anliegt, und auch während des Fließpressens am Oberstempel und am Unterstempel anliegt. Damit wird verhindert, dass Volumenelemente des Rohlings beim Querpressen axial fließen. Die Dimensionierung der Vorsprünge kann dann derart sein, dass die Volumenelemente der Vorsprünge nur in Umfangsrichtung fließen, wohingegen die Volumenelemente der Zwischenabschnitte zwischen den Vorsprüngen bzw. des zentralen Kerns oder Rings, von dem die Vorsprünge abstehen, gar nicht oder nur minimal fließen. Dies bewirkt, dass das radial innenliegende Magnetmaterial der Endform isotrop, das radial außenliegenden Magnetmaterial anisotrop ist bzw. radial vorzugsgerichtet magnetisiert ist. Der Vorteil eines solchen Permanentmagneten besteht darin, dass das isotrope innenliegende Magnetmaterial als magnetischer Rückschluss verwendet werden kann, Somit muss hierfür kein Eisenkern im Permanentmagneten vorgesehen werden.

In einer alternativen Ausführungsvariante können der Rohling und der Ober- und/ oder Unterstempel vor dem Fließpressen relativ zueinander derart positioniert werden, dass zwischen dem Rohling und wenigstens einem der beiden Stempel ein einen Hohlraum bildender Abstand besteht. Dieser Hohlraum dient dem Ausweichen verformten Magnetmaterials. Damit wird erreicht, dass die Volumenelemente der Vorsprünge nicht nur in Umfangsrichtung, sondern auch in axialer Richtung fließen, und auch die Volumenelemente der Zwischenabschnitte zwischen den Vorsprüngen bzw. des zentralen Kerns oder Rings, von dem die Vorsprünge abstehen, in axialer Richtung fließen, und dabei den Hohlraum zunehmend ausfüllen. Die axiale Länge des Rohlings vergrößert sich dadurch. Dies bewirkt, dass der Anteil radial vorzugsgerichteter Bereiche in dem Permanentmagneten erhöht wird, da das Magnetmaterial nun in zwei zueinander orthogonale Richtungen fließt, nämlich in Umfangsrichtung und axial, so dass sich die magnetische Vorzugsrichtung zwangsläufig ausschließlich senkrecht zu den beiden Fließrichtungen, nämlich nur in radialer Richtung ausbilden kann. Im Falle eines massiven Rohlings wird zudem erreicht, auch das Zentralvolumen, d.h. die Volumenelemente der Zwischenabschnitte zwischen den Vorsprüngen bzw. des zentralen Kerns oder Rings, fließt/ fließen und somit eine magnetische Vorzugsorientierung erhält/ erhalten.

Vorzugsweise erfolgt die Positionierung des Rohlings und des Ober- und/ oder Unterstempel vor dem Fließpressen relativ zueinander derart, dass zwischen dem Rohling und beiden Stempeln jeweils ein Hohlraum besteht. Dies ermöglicht, dass der Rohling beim Fließpressen in beide axiale Richtungen fließen kann, d.h. zum Oberstempel und zum Unterstempel. Somit wird ein einseitiges Axialfließen, das im Falle nur eines Hohlraumes an einem Axialende des Rohlings vorläge, vermieden. Dies verbessert die Ausbildung der radialen Vorzugsorientierung über die gesamte Länge der Endform. Um beidseitig des Rohlings Hohlräume zu erhalten, kann die Positionierung des Rohlings auf der zweiten Höhe in axialer Richtung mittig vor den Querstempeln erfolgen.

Idealerweise werden der Rohling und der Ober- und/ oder Unterstempel vor dem Fließpressen relativ zueinander derart positioniert, dass der Ober- und/ oder der Unterstempel eine axiale Begrenzung für das beim Fließpressen des Rohlings in axialer Richtung fließende Magnetmaterial bildet/ bilden. Der Abstand zwischen Oberstempel und Rohling und/ oder Unterstempel und Rohling ist somit nicht so groß, dass am Ende des Fließpressens ein freies Restvolumen des entsprechenden Hohlraums verleibt. Vielmehr wird der Hohlraum durch die Materialverdrängung beim Fließpressen insbesondere vollständig ausgefüllt, so dass das Material gegen die Stirnseite des Ober- und/ oder Unterstempels drückt. Dies vermeidet gegenüber einer am Ende des Fließpressens freien Fließfront fransige Axialenden bei der Endform. Der Abstand zwischen Ober- und Unterstempel definiert die axiale Länge der Endform. Zudem definieren die zum Rohling gerichteten Pressflächen von Oberund Unterstempel die axialen Stirnflächen der Endform.

In einer Ausführungsvariante kann der Unterstempel und/ oder der Oberstempel ein Hohlprofil bilden, in dem die zuvor genannte Welle, insbesondere ein Mittelstift längsbeweglich geführt ist. Der Mittelstift ist bevorzugt dafür vorgesehen, während des Fließpressens in dem zentralen Hohlraum des Rohlings einzuliegen, einen Kern der Pressform zu bilden und somit die Innenkontur des Hohlraums der Endform zu definieren, da die Querstempel das Magnetmaterial dann gegen den Mittelstift pressen. Ferner kann der Mittelstift verwendet werden, den Rohling für das Fließpressen zu positionieren oder zumindest vor dem Fließpressen in Position zu halten. Der Mittelstift ist für diesen Fall unabhängig von Ober- und Unterstempel und relativ zu diesen axial bewegbar. Er liegt sinnvollerweise koaxial im Oberstempel und/ oder Unterstempel ein.

Vorteilhafterweise kann der Mittelstift dazu verwendet werden, den Rohling lagesicher auf dem Unterstempel zu positionieren, sofern der Rohling außerhalb der Pressvorrichtung hergestellt wird. Hierzu kann sich der Mittelstift in einer zum Unterstempel herausgefahrenen Position befinden, so dass der Rohling auf den Unterstempel unter Einführung des Mittelstifts in seinen Hohlraum aufgelegt wird. Dies hat den Vorteil, dass der Rohling automatisch zum Unterstempel zentriert wird. Der Mittelstift hält den Rohling koaxial zum Unterstempel in Position, so dass eine manuelle koaxiale Ausrichtung nicht erforderlich ist.

Sofern auch das axiale Pressen, d.h. die Herstellung des Rohlings aus dem Pulverpressling, auf der erfindungsgemäßen Pressvorrichtung erfolgt, kann dem Mittelstift bei der Herstellung des Rohlings ebenfalls eine wesentliche Rolle zukommen. Der Mittelstift bildet dann auch während des axialen Pressens einen Kern der entsprechenden Pressform und definiert somit die Innenkontur des Hohlraums des Rohlings, da das Magnetmaterial beim axialen Pressen in radialer Richtung gegen den Mittelstift drückt.

Vorteilhafterweise kann der Mittelstift dazu verwendet werden, den Pulverpressling lagesicher auf dem Unterstempel zu positionieren. Hierzu kann sich der Mittelstift in einer zum Unterstempel herausgefahrenen Position befinden, so dass der Pulverpressling auf den Unterstempel unter Einführung des Mittelstifts in seinen Hohlraum aufgelegt wird. Dies hat den Vorteil, dass der Pulverpressling automatisch zum Unterstempel zentriert wird. Der Mittelstift hält den Pulverpressling koaxial zum Unterstempel in Position. Allenfalls ist eine minimale laterale Nachjustierung erforderlich, wenn ein Spiel zwischen der Innenkontur des Pulverpresslings und dem Mittelstift besteht. Denn es ist von Vorteil, wenn die Außenabmessung des Mittelstifts, insbesondere sein Durchmesser, etwas kleiner ist, als die Innenabmessung, insbesondere der Durchmesser, des Hohlraums des Pulverpresslings, um den Mittestift in den Hohlraum leicht einführen bzw. den Pulverpressling mit Spiel auf den Mittelstift setzen zu können.

Der Querschnitt des Mittelstifts und des Hohlraums des Rohlings und/ oder des Pulverpresslings können beispielsweise kreisrund sein. Dies ermöglicht, dass der Rohling oder der Pulverpressling in jeder Winkelposition auf den Unterstempel aufsetzbar ist, weil er relativ zum Mittelstift verdrehbar ist. Wird der Rohling oder der Pulverpressling auf den Unterstempel ausgesetzt, erfordert diese Verdrehbarkeit jedoch eine manuelle Winkelausrichtung des Rohlings bzw. des Pulverpresslings zum Unterstempel, damit die Vorsprünge des Rohlings bzw. des Pulverpresslings mit den Vorsprüngen des Unterstempels fluchten. Diese manuelle Winkelausrichtung kann vermieden werden, indem der Mittelstift einen von der Kreisform abweichenden Querschnitt und der Hohlraum des Rohlings und/ oder des Pulverpresslings einen hierzu korrespondierenden Querschnitt aufweist/ aufweisen. Die Querschnittsform des Mittelstifts kann z.B. eine Abflachung aufweisen, oval oder mehreckig, z.B. dreivier- oder vieleckig sein, alternativ auch kreuzförmig sein. Ein von der Kreisform abweichender Querschnitt bewirkt einen Formschluss zwischen Mittelstift und Rohling bzw. Pulverpressling derart, dass der Rohling nach dem Aufsetzen auf den Mittelstift nicht mehr relativ zu diesem gedreht werden kann. Der Mittelstift hält den Rohling somit winklig zum Unterstempel in Position und sorgt für eine automatische winklig korrekte Ausrichtung zwischen Rohling bzw. Pulverpressling und Stempel, jedenfalls sofern die Winkellage des Mittelstiftquerschnitts bezogen auf die Außenkontur des Unterstempels identisch ist mit der Winkellage des Hohlraumquerschnitts bezogen auf die Außenkontur des Rohlings bzw. Presslings, was bevorzugt der Fall ist. Es sei noch erwähnt, dass die Innenkontur des als Hohlprofil ausgebildeten Unter- oder Oberstempels ebenfalls den von der Kreisform abweichenden Querschnitt des Mittelstifts haben kann. Dies ist allerdings nicht zwingend.

Durch das axiale Pressen wird der Pulverpressling auf den Mittelstift gepresst, so dass der Rohling auf diesem kraftschlüssig haftet. Dieser Umstand kann ausgenutzt werden, um den Rohling mit dem Mittelstift relativ zum Ober- und Unterstempel zu positionieren, insbesondere auf der zweiten axialen Höhe. Der Mittelstift hält den Rohling durch den Kraftschluss fest, insbesondere, wenn der Rohling beabstandet zu Ober- und/ oder Unterstempel vor den Querstempeln positioniert wird.

Damit die Querstempel die für das Fließpressen erforderliche Presskraft aufbringen, können die Querstempel jeweils von einem mit einem Drehgestell gelenkig verbundenen Kniehebel bewegt werden, mit dem sie über ein Kniegelenk verbunden sind. Die Querstempel werden dabei geeigneterweise in jeweils mindestens einem Führungselement gehalten, so dass sie nur in ihrer Längsrichtung bewegbar sind, d.h. nicht zur Seite ausweichen können. Über den Kniehebel und das Kniegelenk wird eine Schwenkbewegung des Drehgestells um einen vergleichsweise großen Schwenkwinkel bei geringer Kraft in eine vergleichsweise kurze Linearbewegung der Querstempel mit hoher Presskraft überführt.

Das Drehgestell kann beispielsweise von mindestens einem tangential an diesen angreifenden Hubkolben eines Hubzylinders, beispielsweise eines Hydraulikzylinders geschwenkt werden, indem der Hubkolben eine Linearbewegung ausführt. Alternativ ist ein Pneumatikzylinder oder ein rein mechanischer, insbesondere motorischer Antrieb des Drehgestells möglich.

Bei der erfindungsgemäßen Vorrichtung kann die Anzahl der Querstempel vorzugsweise der Anzahl der Vorsprünge entsprechen, wobei jeder Querstempel zum Fließpressen eines der Vorsprünge vorgesehen ist. Je nach Größe des herzustellenden Magneten kann gemäß einer anderen Variante vorgesehen sein, dass mehr Vorsprünge als Querstempel vorhanden sind, so dass ein Querstempel zwei oder mehr Vorsprünge gleichzeitig umformt.

Geeigneterweise sind alle Querstempel identisch. Je nach Bedarf kann für besondere Magnetformen jedoch auch vorgesehen sein, dass sich zwei oder mehr Querstempel in Form und oder Größe unterscheiden.

Gemäß einer bevorzugten Ausführungsvariante können die Pressflächen der Querstempel an einem oder an ihren beiden Umfangsenden jeweils einen sich längserstrecken nasenartigen Kantenvorsprung aufweisen. Mit anderen Worten sind in beide Umfangsrichtungen die Pressflächen durch jeweils eine Kante begrenzt, entlang derer sich ein Vorsprung erstreckt, der im Querschnitt nasenförmig ist. Die Kantenvorsprünge bewirken, dass die Volumenelemente der Vorsprünge am Ende ihres Fließweges, d.h. gegen Ende des Pressvorgangs zur Rohlingachse umgelenkt werden. Dies vermeidet, dass Materialvolumen des Rohlings zwischen benachbarte Querstempel gelangt. Ansammlungen solchen Materialvolumens führen zu einem höheren Verschleiß und verhindern ein vollständiges Zusammenfahren der Querstempel. Die Kantenvorsprünge vermeiden somit auch die Entstehung von Pressfahnen (Graten) zwischen benachbarten Querstempeln. Die Außenkontur der Endform wird dadurch glatter und im Querschnitt präziser, wobei die Kantenvorsprünge in der Außenkontur der Endform allerdings eine Längsrille hinterlassen.

Die Kantenvorsprünge sind beispielsweise im Querschnitt im Wesentliche dreieckig. Dabei kann der Rücken der Kantenvorsprünge fluchtend in die entsprechende Seitenflanke des Querstempels übergehen, mit der ein Querstempel an einem benachbarten Querstempel im eingefahrenen Zustand anliegt, so dass ein Kantenvorsprung die entsprechende Seitenflanke quasi vergrößert. Kantenvorsprünge benachbarter Querstempel liegen somit im eingefahrenen Zustand der Querstempel Rücken-an-Rücken aneinander.

Alternativ oder zusätzlich zu den Kantenvorsprüngen können die Pressflächen der Querstempel an einem oder an ihren beiden Axialenden jeweils einen radialen Stufenvorsprung aufweisen, der sich in Umfangsrichtung erstreckt. Auf seiner der Pressfläche zugewandten Seite bildet der Stufenvorsprung eine Axialflussbegrenzung für das fließgepresste Materialvolumen am Ende seines Fließweges in axialer Richtung, so dass die Endform einen sauberen Rand erhält.

Gemäß einer weiteren bevorzugten Ausführungsvariante können die Querstempel jeweils einen wechselbaren, die Pressfläche bereitstellenden Stempelkörper und einen mit dem Kniehebel gelenkig verbundenen Stempelträger aufweisen, der den Stempelkörper trägt. Dieser zumindest zweiteilige Aufbau eines Querstempels ermöglicht eine einfache Auswechselbarkeit des Stempelkörpers, welcher endseitig die Pressfläche aufweist, um den Querstempel an eine bestimmte, herzustellende Außenkontur anzupassen oder im Falle von Verschleiß auszutauschen.

Stempelkörper und Stempelträger sind lösbar miteinander verbunden. Dies kann beispielsweise über eine Schraubverbindung erfolgen. Bevorzugt kann die Verbindung über einen Formschluss erfolgen, was eine werkzeugfreie schnelle Auswechselbarkeit gewährleistet. Bevorzugt weist eine der Verbindungskomponenten, beispielsweise der Stempelträger, eine Tasche auf, in die die andere Verbindungskomponente, beispielsweise zum Stempelkörper, mit einem entsprechend geformten Ende, formschlüssig eingesetzt werden kann bzw. eingesetzt ist. Dies ermöglicht ein einfaches Einsetzen und Entfernen der anderen Komponente insbesondere durch axiales Fügen. Beispielsweise kann die Verbindung eine Schwalbenschwanz-Verbindung sein.

Das axiale Pressen ist bevorzugt ein Heißpressen, das bei einer Temperatur zwischen 750°C und 900°C erfolgt. Unabhängig davon, aber vorzugsweise in Kombination hierzu, ist auch das Fließpressen in Querrichtung ein Heißfließpressen, das bei einer Temperatur zwischen 750°C und 900°C erfolgt.

Als Magnetmaterial für den Pulverpressling kann ein ferromagnetisches Material verwendet werden, das seltene Erden enthält, beispielsweise eine Legierung aus Neodym-Eisen-Bor (NdFeB).

Weitere Vorteile und Merkmale der Erfindung werden nachfolgend anhand von Ausführungsbeispielen und der beigefügten Figuren beschrieben.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus.

Der Begriff Umfangsrichtung bezieht sich im Sinne der Erfindung auf die Richtung, in die die Volumenelemente der Vorsprünge beim Pressen durch die Querstempel fließen. Er schränkt die Form der Pressfläche nicht auf einen Umfangsabschnitt eines Kreiszylindermantels ein, welcher möglich, jedoch nicht zwingend ist. Zwar kann die Pressfläche einen Umfangsabschnitt, beispielsweise einen 90°-Abschnitt eines Kreiszylindermantels bilden. Alternativ kann die Pressfläche aber auch eben sein, insbesondere, wenn der von dem entsprechenden Querstempel erzeugte Umfangsabschnitt der Endform eine ebene Kontur haben soll, wie beispielsweise bei einem Sechseck oder Achteck. In Umfangsrichtung kann auch als "zu benachbarten Querstempeln hin" verstanden werden.

Die in den Figuren verwendeten Bezugszeichen behalten von einer Figur zur nächsten ihre Bedeutung und identifizieren identische oder gleichwirkende Elemente.

Es zeigen:
- Fig. 1:: die Herstellung ringförmiger Permanentmagnete nach dem Stand der Technik durch Vorwärts- und Rückwärtsfließpressen
- Fig. 1a:: den Querschnitt eines Ringmagneten mit radialer Vorzugsorientierung.
- Fig. 2a:: eine erste Ausführungsvariante eines erfindungsgemäßen Pulverpresslings im radialen Querschnitt
- Fig. 2b:: eine perspektivische Darstellung des Pulverpresslings gemäß der ersten Ausführungsvariante
- Fig. 3:: eine erste Ausführungsvariante eines erfindungsgemäßen Rohlings in perspektivischer Darstellung
- Fig. 4:: eine überlagerte Darstellung des Anfangs- und Endzustands des Rohlings beim Fließpressen gemäß der ersten Ausführungsvariante im radialen Querschnitt
- Fig. 5:: eine Veranschaulichung der Schritte des erfindungsgemäßen Verfahrens
- Fig. 6:: eine perspektivische Darstellung des Unterstempels für die erste Ausführungsvariante
- Fig. 7:: eine zweite Ausführungsvariante eines erfindungsgemäßen Pulverpresslings in perspektivischer Darstellung
- Fig. 8:: eine zweite Ausführungsvariante eines erfindungsgemäßen Rohlings in perspektivischer Darstellung
- Fig. 9:: eine überlagerte Darstellung des Anfangs- und Endzustands des Rohlings beim Fließpressen gemäß der zweiten Ausführungsvariante im radialen Querschnitt
- Fig. 10:: eine erfindungsgemäße Pressform in perspektivischer Ansicht mit entfernter Oberplatte des Drehgestells
- Fig. 11:: eine überlagerte Darstellung des Anfangs- und Endzustands beim Fließpressen in einem radialen Querschnitt durch die Pressvorrichtung auf Höhe der Querstempel
- Fig. 12:: einen axialen Querschnitt durch die Pressvorrichtung entlang der Schnittlinie E-E gemäß Fig. 11
- Fig. 13:: einen Stempelkörper
- Fig. 14:: einen Stempelkörper mit Kantenvorsprüngen an den Umfangsenden
- Fig. 14a:: Vergrößerter Querschnitt eines Ausschnitts des Stempelkörpers nach Fig. 13a mit Pressfläche
- Fig. 15:: einen Stempelkörper mit Stufenvorsprüngen an den Axialenden

Figur 1 veranschaulicht ein Verfahren zur Herstellung ringförmiger Permanentmagnete 30 mit radial vorzugsgerichteter Magnetisierung 38 nach dem Stand der Technik. Hierbei wird zunächst ein Pulverpressling 1, der durch Verdichten eines feinkörnigen Pulvers aus Magnetmaterial hergestellt ist, axial gepresst, wie die Pfeile F andeuten. Das axiale Pressen erfolgt bei hoher Temperatur, z.B. zwischen 750° C und 900° C, sodass dieser Schritt auch als Heißpressen bezeichnet wird.

Man erhält einen Rohling 2, der anschließend durch Heißfließpressen umgeformt wird, was ebenfalls bei einer hohen Temperatur zwischen 750° C und 900° C erfolgt.

Das mittlere obere Bild in Figur 1 veranschaulicht ein Vorwärtsfließpressen, bei dem ein Unterstempel 5 und das umzuformende Material des Rohlings 2 dieselbe Fließrichtung haben. Der Unterstempel 5 wird hierbei auf einen Oberstempel 4 geringeren Durchmessers zu bewegt, sodass das Material des Rohlings 2 axial an dem Oberstempel 4 seitlich vorbeifließt. Eine die beiden Stemple 4, 5 umgebene Pressform ist hier nicht dargestellt. Das mittlere untere Bild in Figur 1 veranschaulicht ein Rückwärtsfließpressen, bei dem der Oberstempel 4 axial auf den Unterstempel 5 zu bewegt wird und dabei in den Rohling 2 hineindrückt, sodass das Material an dem Oberstempel 4 in entgegengesetzter Bewegungsrichtung hochfließt. Beide Verfahren ergeben eine topfförmige Endform 3, bei der sowohl der vergleichsweise dicke, nicht geflossene Boden als auch der ungleichmäßig ausgebildete obere Rand abgeschnitten werden müssen. Lediglich der mittlere Bereich, der ca. ein Drittel bis 50 % der axialen Länge der Endform ausmacht, ist ausreichend in axialer Richtung geflossen, sodass sich darin eine radiale Magnetisierung 38 ergibt, wie sie in Figur 1a bei dem hergestellten Permanentmagneten 30 veranschaulicht ist.

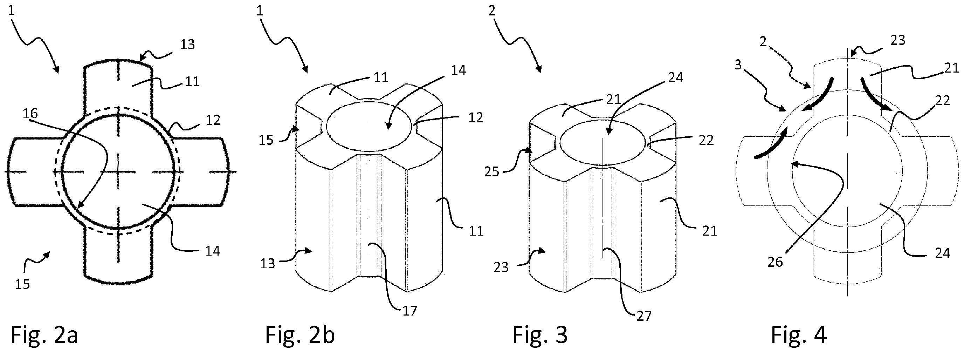

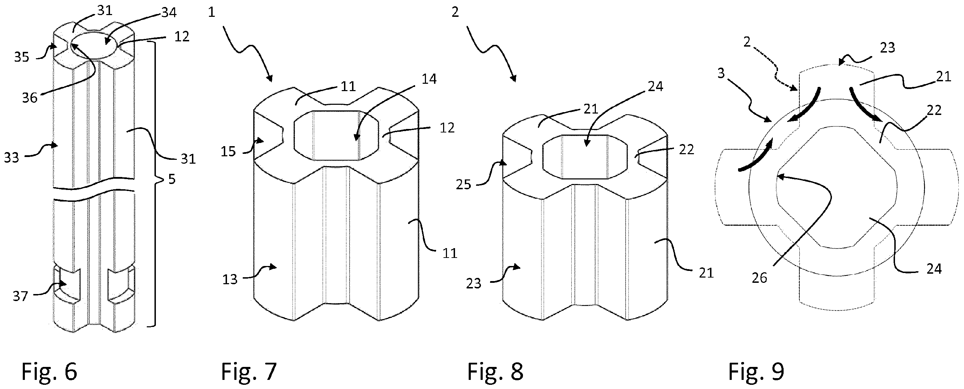

Um die hohe Menge an Ausschuss magnetischen Material zu minimieren, erfolgt erfindungsgemäß eine Umformung eines besonders geformten Rohlings 2 derart, dass Volumenelemente in Umfangsrichtung fließen. Hierfür wird bei dem Rohling eine Querschnittsform verwendet, die radial nach außen gerichtete Vorsprünge 21 aufweist. Figur 3 zeigt eine perspektivische Ansicht eines erfindungsgemäßen Rohlings 2 mit solchen Vorsprüngen 21, der hier einen Hohlköper bildet, um einen Ringmagneten 30 herzustellen. In dieser beispielhaften Ausführungsvariante sind vier solcher Vorsprünge 21 symmetrisch über den Umfang des Rohlings 2 verteilt und im Querschnitt blockförmig ausgebildet, so dass ein Vorsprung 21 auch als Zahn betrachtet werden kann und der Rohling 2 im Querschnitt insgesamt kreuzförmig ist. Die Außenkontur des Rohlings 2 ist über seine axiale Länge konstant, sodass der Rohling 2 einen Zylinder mit kreuzförmiger Grundform bildet. Ein zentraler kreiszylindrischer Hohlraum 24 erstreckt sich koaxial durch den Rohling 2 entlang der Rohlingachse 27 hindurch, um einen Mittelstift 7 einer nachfolgend beschriebenen Pressvorrichtung 50 aufzunehmen, siehe Figur 9.

Die Vorsprünge 21 springen von einem zentralen Ring vor, welcher durch die innenliegensten Abschnitte der Vorsprünge 21 einerseits und durch Zwischenabschnitte 22 andererseits gebildet ist, die sich jeweils abwechseln. Der zentrale Ring ist in Fig. 2a gestrichelt dargestellt. Die innenliegenden Bereiche und die Zwischenabschnitte 22 bilden jeweils Sektorabschnitte des zentralen Rings. Zwischen zwei in Umfangsrichtung benachbarten Vorsprüngen 21 liegt außerhalb der Zwischenabschnitte 22 jeweils ein freier Zwischenbereich 25. Die Außenkontur 23 der Vorsprünge 21 ist im Querschnitt konvex-bogenförmig, bzw. bildet den Abschnitt eines Kreiszylindermantels, um gleich zu Beginn des erfindungsgemäßen Umformens des die Vorsprünge 21 bildenden Materialvolumens eine definierte Fließrichtung zu erhalten. Das Umformen erfolgt mittels quer zur Rohlingachse 27 pressenden Querstempeln 6 der Pressvorrichtung 50, wie nachfolgend noch beschrieben wird.

Die Fließrichtungen bei der Umformung der Vorsprünge 21 sind in Figur 4 dargestellt, die eine Überlagerung des Querschnitts des Rohlings 2 mit dem Querschnitt der resultierenden Endform 3 zeigt. Die Endform 3 bildet einen hohlen Kreiszylinder, der dem herzustellenden ringförmigen Permanentmagneten 30 entspricht. Die Vorsprünge 21 stehen radial auch gegenüber der Außenkontur der Endform 3 hervor. Die radiale Dicke der Zwischenabschnitte 22 ist geringer als die radiale Dicke des die Endform 3 bildenden Rings, so dass die außerhalb der Außenkontur der Endform 3 liegenden Bereiche des Materialvolumens der Vorsprünge 21 radial nach innen gedrückt werden und dabei in Umfangsrichtung fließen. Die radiale Dicke der Zwischenabschnitte 22 wird dadurch auf die radiale Dicke der Endform 3 angehoben. Die Fließrichtungen sind in Figur 4 durch dicke Pfeile dargestellt.

Der in Figur 3 gezeigte Rohling 2 wird durch axiales Heißpressen eines Pulverpresslings 1, beispielsweise bei 750°C - 900°C hergestellt, welcher in den Figuren 2a und 2b gezeigt ist. Figur 2a zeigt einen Querschnitt, Figur 2b eine perspektivische Ansicht des Pulverpresslings 1. Der Pulverpressling 1 ist durch Verdichten eines feinkörnigen Pulvers aus Magnetmaterial, beispielsweise einer Legierung aus Neodym-Eisen-Bor hergestellt. Die Außenkontur des Pulverpresslings 1 ist identisch mit der Außenkontur des Rohlings 2. Er besitzt vier Vorsprünge 11, die in Gestalt sich parallel zur Presslingachse 17 erstreckender blockförmiger Zähne symmetrisch über den Umfang verteilen, wobei benachbarte Vorsprünge 11 durch einen entsprechenden Zwischenbereich 15 getrennt sind. Die Vorsprünge 11 stehen radial nach außen von einem zentralen Ring vor, der durch den radial innenliegendsten Abschnitt der Vorsprünge 11 einerseits und durch Zwischenabschnitte 12 andererseits gebildet wird, wobei die Zwischenabschnitte 12 zwei benachbarte Vorsprünge 11 miteinander Verbinden und einen Sektorabschnitt des zentralen Rings bilden. Der zentrale Ring ist in Figur 2a durch einen gestrichelten Kreis veranschaulicht. Auch der Pulverpressling 1 bildet einen Hohlkörper, wobei sich entlang der Presslingachse 17 koaxial ein im Wesentlichen kreiszylindrischer Hohlraum 14 erstreckt, um den Mittelstift 7 aufzunehmen, der während des Fließpressens in dem Hohlraum 24 des Rohlings 2 bestimmungsgemäß einliegt. Die Außenkontur 13 der Vorsprünge 11 des Pulverpresslings 1 ist wie beim Rohling 2 im Querschnitt konvex-bogenförmig.

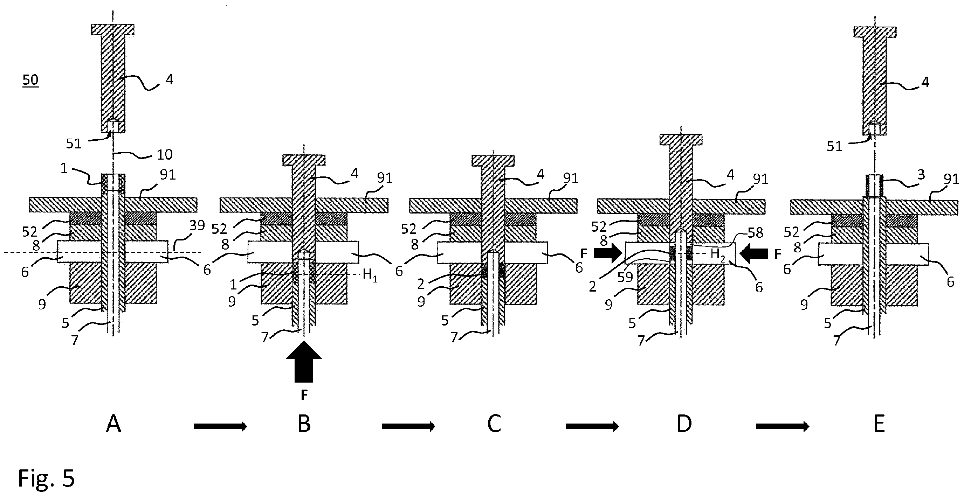

Figur 5 zeigt die Hauptkomponenten einer erfindungsgemäßen Pressvorrichtung 50 sowie den Verlauf des auf dieser Vorrichtung 50 ausgeführten Verfahrens gemäß der Erfindung. Die erfindungsgemäße Pressvorrichtung 50 dient hier nicht nur der Herstellung eines ringförmigen Permanentmagneten 30 durch Umformung des Rohlings 2 in eine Endform 3, sondern auch der Herstellung des Rohlings 2 aus einem Pulverpressling 1. Die Pressvorrichtung 50 umfasst einen Oberstempel 4, einen Unterstempel 5 mit einem Mittelstift 7, eine ein Oberteil 8 und ein Unterteil 9 aufweisende Pressform sowie Querstempel 6. Eine Abdeckplatte 91 deckt die aufheizbare Pressform 8, 9 ab. Ferner liegt zwischen der Abdeckplatte 91 und der Pressform bzw. dem Oberteil 8 eine Abstandsplatte 52.

Der Unterstempel 5 ist als Hohlwelle ausgebildet, wobei in dem Unterstempel 5 der Mittelstift 7 koaxial beweglich geführt ist. Der Mittelstift 7 kann unabhängig vom Unterstempel 5 und Oberstempel 4 relativ zu diesen bewegt werden. Die Pressform 8, 9 dient zur axialen Führung von Oberstempel 4 und Unterstempel 5. Hierfür weist die Pressform 8, 9 eine Längsausnehmung auf, deren Querschnitt im Wesentlichen dem Außenquerschnitt des Unterstempels 5 beziehungsweise des Oberstempels 4 entspricht. Ober- und Unterstempel 4, 5 weisen ebenfalls den selben Querschnitt auf. Sie sind zudem relativ zueinander in der Längsausnehmung beweglich. Die Pressform 8, 9 weist ferner Querausnehmungen auf, in denen die Querstempel 6 quer zur Längspressachse 10 linear entlang einer Querpressachse 39 geführt sind.

Das erste Bild A von Figur 5 zeigt die Einlegeposition des Pulverpresslings 1 in die erfindungsgemäße Pressvorrichtung 50. Der Oberstempel 4 ist hierfür auf Abstand zur Pressform 8, 9 gefahren, damit der Pulverpressling 1 auf dem Unterstempel 5 positioniert werden kann. Hierzu ist der Unterstempel 5 soweit aus der Pressform 8, 9 herausgefahren, dass sein axiales Ende geringfügig vor der Abdeckplatte 91 vorsteht. Um eine axiale Zentrierung des Pulverpresslings 1 zu erreichen, steht der Mittelstift 7 etwas axial von dem Unterstempel 5 hervor, sodass der Pulverpressling 1 so auf den Unterstempel 5 gesetzt werden kann, dass der Mittelstift 7 in dem Hohlraum 14 einliegt.

Der Unterstempel 5 fährt anschließend in die Pressform 8, 9 hinein, bis der Pulverpressling 1 vollständig im Unterteil 9 der Pressform liegt, d.h. unterhalb der Querstempel 6. Dies zeigt Bild B der Figur 5, wobei der Pulverpressling 1 auf einer ersten axialen Höhe H₁ angeordnet ist. Der Oberstempel 4 folgt dem Unterstempel 5 und zunächst wird so positioniert, dass sein zum Pulverpressling 1 gerichtetes Axialende am Pulverpressling 1 anliegt. Der Mittelstift 7 wird so positioniert, dass er den Hohlraum 14 des Pulverpresslings 1 vollständig ausfüllt, insbesondere in eine Sackbohrung 51 des Oberstempels 4 hineinragt. Dies ist der Ausgangszustand zu Beginn des axialen Pressens, für das die Pressform anschließend aufgeheizt wird.

Der Unterstempel 5 presst nun den Pulverpressling 1 axial gegen den Oberstempel bewegt sich dabei aufgrund der resultierenden Volumenverringerung des Pulverpresslings 1 auf den Oberstempel 4 zu. Der Mittelstift 7 macht diese Bewegung mit, sodass er am Ende des Axialpressens tiefer in der Sackbohrung 51 einliegt. Den Endzustand des axialen Pressens zeigt Bild C von Figur 5. Aus dem Pulverpressling 1 ist nun der Rohling 2 geworden, der sich in Form und Größe vom Pulverpressling 2 lediglich in seiner axialen Länge unterscheidet.

Der hergestellte Rohling 2 wird anschließend auf eine zweite axiale Höhe H₂ verfahren, auf der die Querpressachse 39 der Querstempel 6 liegt. Dieser Transport erfolgt durch den Mittelstift 7, auf dem der Rohling 2 aufgrund des Axialpressens haftet. Wie Bild D von Figur 5 zeigt, wird der Rohling 2 hierfür bezogen auf die axiale Höhe der Querstempel 6 mittig vor diesen bzw. zwischen diesen positioniert. Die Höhe der Querstempel 6 ist so bemessen, dass sie größer ist als die axiale Länge des Rohlings 2, um zu ermöglichen, dass der Rohling 2 beim Umformen der Vorsprünge 21 auch in axialer Richtung fließen kann. Aufgrund der Fließrichtung richten sich die die magnetischen Dipole erzeugenden Kristallachsen im Magnetmaterial radial aus.

Um die Querstempel 6 in ihrer Bewegung nicht zu behindern, sind der Ober- und Unterstempel 4, 5 aus der Flucht der Querstempel 6 zurückgefahren. Sie sind jedoch so positioniert, dass sie mit der unteren und oberen Führung der Querstempel 6 bzw. der Querausnehmungen in der Pressform 8, 9 fluchten, wie Bild D in Figur 5 zeigt. Da die Erstreckung der Querstempel 6 entlang der Längspressachse 10 größer ist als die axiale Länge des Rohlings 2 ergibt sich durch die Positionierung von Oberund Unterstempel 4, 5 eine Beabstandung zum Rohling 2 derart, dass zwischen dem Oberstempel 4 und dem Rohling 2 ein oberer hohler Ringraum 58 und zwischen dem Rohling 2 und dem Unterstempel 5 ein unterer hohler Ringraum 59 vorliegt. Die Ringräume 58, 59 bilden für das umzuformende Material des Rohlings 2 leere Ausweichvolumina. Die axialen Stirnseiten von Ober- und Unterstempel 4, 5 bilden ferner axiale Begrenzungsflächen für den umgeformten Rohling 2.

Bild D von Figur 5 zeigt den Ausgangszustand des erfindungsgemäßen Fließpressens quer zur Längspressachse 10 beziehungsweise quer zur Rohlingachse 27. Die Querstempel 6 werden nun unter Aufwendung einer Presskraft F, die durch die dicken Pfeile in Bild D dargestellt sind, quer zur bzw. radial auf die Rohlingachse 27 zu bewegt, so dass das die Vorsprünge 21 bildende Materialvolumen wie in Figur 4 dargestellt in Umfangsrichtung geschoben wird. Gleichzeitig fließt der Rohling 2 in axialer Richtung, sodass die Länge des Rohlings 2 größer wird, bis das Materialvolumen des Rohlings 2 an den oberen und unteren Pressstempel 4, 5 anstößt. Die so hergestellte Endform 3 wird anschließend aus der Pressvorrichtung 50 heraustransportiert.

Bild E von Figur 5 zeigt die Ausstoßposition der Endform 3, die den umgeformten Rohling 2 bildet. Zum Ausstoßen wird der Oberstempel 4 zunächst aus der Pressform herausbeweg und beabstandet zur Abdeckplatte 91 positioniert. Der Unterstempel 5 fährt ebenfalls leicht aus der Abdeckplatte 91 hervor. Der Mittelstift 7 fährt innerhalb des Unterstempels 5 zurück, sodass er nicht mehr in den ehemaligen Hohlraum 24 des Rohlings 2 einliegt. Die Endform 3 kann anschließend aus der Pressvorrichtung 50 entnommen werden.

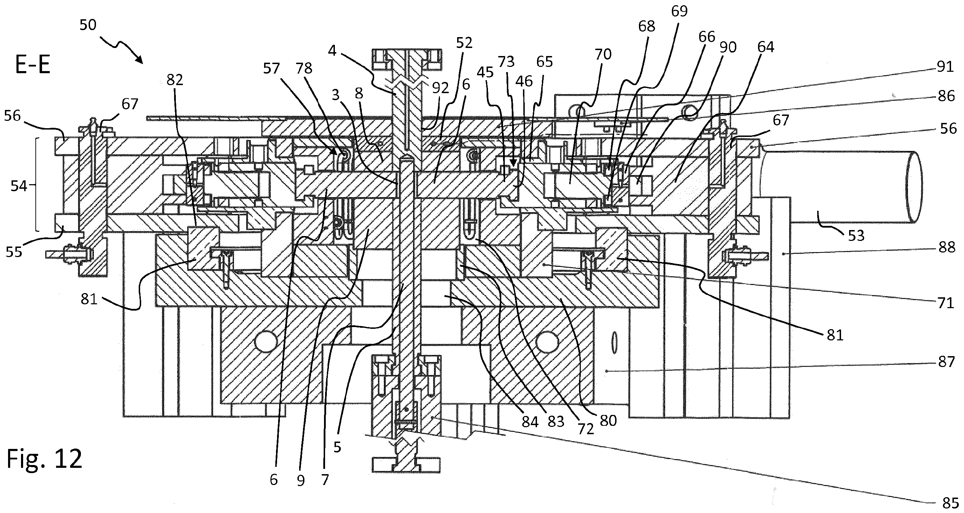

Figur 6 zeigt in perspektivischer Darstellung des Unterstempel 5. Sein Querschnitt entspricht dem Querschnitt des Pulverpresslings 1 bzw. des Rohlings 2. So besitzt der Unterstempel 5 vier Vorsprünge 31, die symmetrisch über den Umfang verteilt sind und im Querschnitt betrachtet blockförmige Zähne bilden. Benachbarte Vorsprünge 31 sind jeweils über einen Zwischenabschnitt 32 miteinander verbunden, der einen Sektorabschnitt eines zentralen Rings bildet, von dem die Vorsprünge 31 in radialer Richtung vorstehen. Der radial zu innerst liegende Teil der Vorsprünge 31 bildet die übrigen Sektorabschnitte des zentralen Rings. Außerhalb der Zwischenabschnitte 32 liegt zwischen benachbarten Vorsprüngen 31 jeweils ein Zwischenbereich 35, der im eingesetzten Zustand des Unterstempels 5 in die Pressvorrichtung 50 von der Pressform ausgefüllt wird. Die Außenkontur 33 der Vorsprünge 31 korrespondiert ebenfalls mit der Außenkontur 13, 23 des Pulverpresslings 1 bzw. des Rohlings 2. Die axiale Stirnseite des Unterstempels 5 bildet somit eine kreuzförmige Pressfläche, um den Pulverpressling 1 vollflächig, und hier ohne Formwandlung, in den Rohling 2 zu überführen. Der Unterstempel 5 bildet ein Profil, dessen Querschnitt über nahezu die gesamte Länge identisch ist. Ausnehmungen 37 an dem der Pressform gegenüberliegenden axialen Ende des Unterstempels 5 ermöglichen die formschlüssige Aufnahme in einer den Unterstempel 5 längsbewegenden Halterung 85, siehe Figur 12.

Um den Mittelstift 7 aufnehmen zu können, ist das Profil des Unterstempels 5 hohl, wobei es einen über die gesamte axiale Länge erstreckenden Hohlraum 34 mit einer kreiszylindrischen Innenkontur 36 aufweist. Die Innenkontur 36 des Unterstempels 5 entspricht der Außenkontur des Mittelstifts 7. Entsprechend ist auch die Innenkontur 26 des Rohlings 2 beziehungsweise die Innenkontur 16 des Pulverpresslings 1 kreiszylindrisch. In der Einlegeposition gemäß Bild A von Figur 5 führt dies jedoch dazu, dass nach dem Aufsetzen des Pulverpresslings 1 auf den Unterstempel 5 eine Winkelausrichtung derart erforderlich ist, dass die Vorsprünge 11 des Pulverpresslings 1 mit den Vorsprüngen 31 des Unterstempels 5 fluchten. Diese Ausrichtung kann vermieden werden, indem der Mittelstift 7 einen von der Kreisform abweichenden Querschnitt beziehungsweise eine von der Kreiszylinderform abweichende Außenkontur aufweist. Beispielsweise kann die Außenkontur wenigstens eine oder mehrere Abflachungen aufweisen. Entsprechend ist dann eine korrespondierende Innenkontur 26, 16 bei dem Rohling 2 und dem Pulverpressling 1 vorzusehen, gegebenenfalls auch bei dem Unterstempel 5 und bei dem Oberstempel 4 hinsichtlich der Sackbohrung 51, damit kein Spalt zwischen Mittelstift und Stempel vorliegt, in den Magnetmaterial hineingepresst wird.

Eine beispielhafte Innenkontur 16, 26 mit vier Abflachungen und abgerundeten Innenecken zwischen diesen weisen der Pulverpressling 1 und der Rohling 2 in den Figuren 7, 8 und 9 auf. Im Übrigen ist der Pulverpressling 1 in Figur 7 mit dem Pulverpressling 1 in Figur 2b und der Rohling 2 in Figur 8 mit dem Rohling 2 in Figur 3 identisch. Auch unterscheiden sich die Figuren 9 und 4 lediglich bezüglich der Innenkontur 26 des Hohlraums 24 zur Aufnahme des korrespondierend geformten Mittelstifts 7.

Beispielsweise weist auch der Hohlraum 34 des Unterstempels 5 eine zur Innenkontur 16, 26 von Pulverpressling 1 und Rohling 2 identische Innenkontur 36 auf, deren Winkelausrichtung bezogen auf die Vorsprünge 31 des Unterstempels 5 identisch ist mit der Winkelausrichtung der Innenkontur 16, 26 bezogen auf die Vorsprünge 11 und 21 von Pulverpressling 1 und Rohling 2. Damit wird erreicht, dass beim Aufsetzen des Pulverpresslings 1 auf den Unterstempel 5 unter Einführen des Mittelstifts 7 in den Hohlraum 14 die Vorsprünge 11 des Rohlings 1 automatisch mit den Vorsprüngen 31 des Unterstempels 5 fluchten, so dass keine manuelle Ausrichtung des Pulverpresslings 1 relativ zum Unterstempel 5 erforderlich ist.

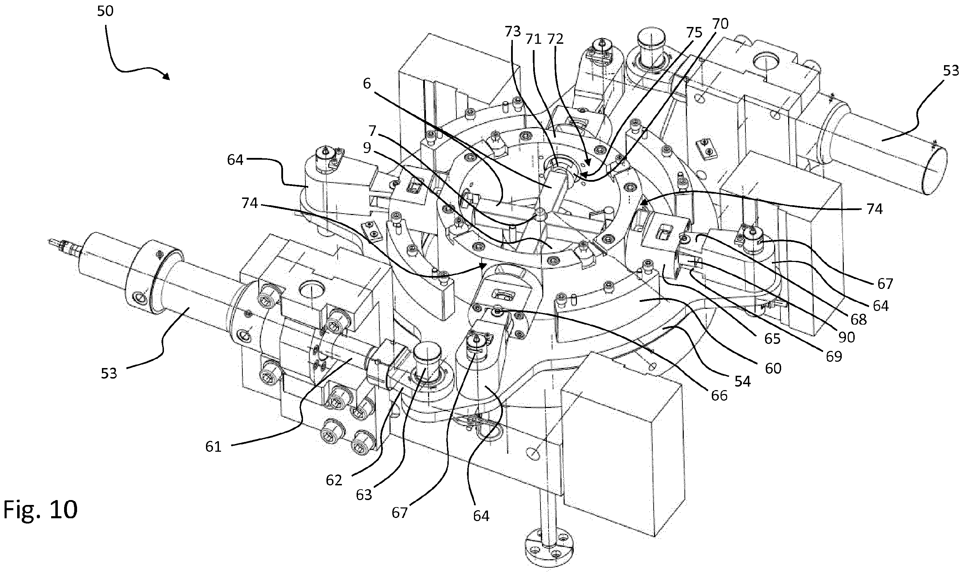

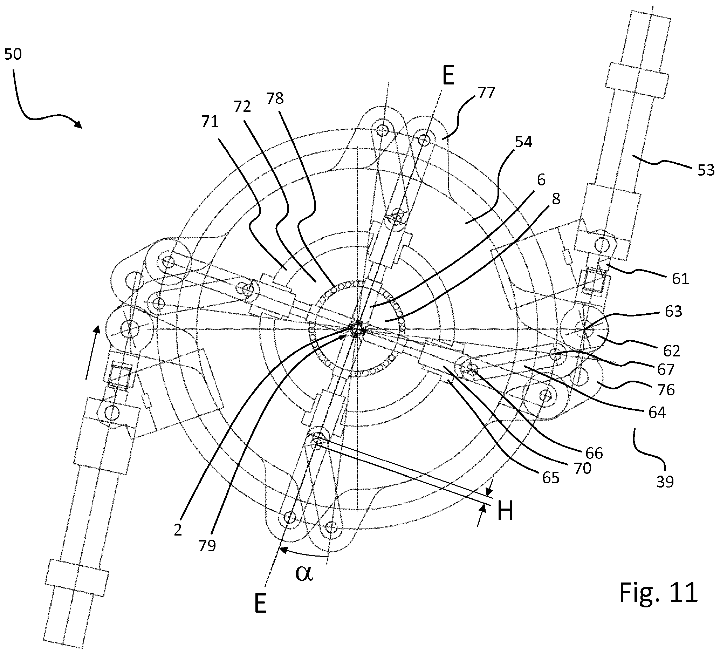

Figuren 10, 11 und 12 zeigen eine erfindungsgemäße Pressvorrichtung 50 in perspektivischer Darstellung (Figur 10), im radialen Querschnitt (Figur 11) und im axialen Querschnitt (Figur 12).

Die Pressvorrichtung 50 weist ein Drehgestell 54 umfassend eine Unterplatte 55 und eine Oberplatte 56 auf, wobei in Figur 10 die Oberplatte 56 entfernt ist, um den Blick auf die Querstempel 6 und den Pressraum freizugeben. An gegenüberliegenden Seiten ist jeweils ein Hubkolben 61 eines Hydraulikzylinders 53 mit dem Drehgestell 54 verbunden. Hierzu umgreift eine am Ende des Hubkolbens 61 befestigte Gelenköse 62 einen Bolzen 63, der sich zwischen den beiden Platten 55, 56 des Drehgestells erstreckt und mit diesen Platten fest verbunden ist. Der Hubkolben 61 ist linear beweglich, wobei seine Bewegung tangential zum Drehgestell 54 gerichtet ist, so dass sich das Drehgestell 54 durch eine Bewegung des Hubkolbens 61 um einen Winkel α verschwenken lässt, siehe Figur 11.

Jeder der Querstempel 6 ist an seinem radial äußeren Ende über ein Kniegelenk 66 mit einem Kniehebel 64 verbunden. Der Kniehebel 64 umgreift einen Gelenkbolzen 67, um dessen Achse der Kniehebel 64 verschwenkbar ist. Der Gelenkbolzen 67 ist an seinen beiden Enden fest mit den beiden Platten 55, 56 des Drehgestells 54 verbunden. Um Material einzusparen, besitzt das Drehgestell 54 Erweiterungen 77, in deren Bereich jeweils ein Gelenkbolzen 67 eines Kniehebels 64 angeordnet ist. Zwischen zwei in Umfangsrichtung benachbarten Erweiterungen 77 ist der Radius der Ober- und Unterplatte 55, 56 somit verringert. Zwei der beiden Erweiterungen 77 dienen gleichzeitig als Angriffspunkt für jeweils einen der beiden Hubkolben 61, wobei diese beiden Erweiterungen 77 in Umfangsrichtung breiter ausgebildet sind, als die anderen beiden Erweiterungen 77.

Jeder Kniehebel 64 weist eine zum entsprechenden Querstempel 6 gerichtete gabelförmige Aufnahme auf, umfassend einen oberen Vorsprung 68 und einen diesem beabstandet gegenüberliegenden unteren Vorsprung 69. Das Kniegelenk 66 ist durch einen Gelenkstift gebildet, der sich durch die beiden Vorsprünge 68, 69 hindurcherstreckt und jenseits der Vorsprünge 68, 69 jeweils fixiert ist. Zwischen den Vorsprüngen 68, 69 der gabelartigen Aufnahme ist ein Zapfen 90 angeordnet, der das äußere radiale Ende eines Querstempels 6 bildet. Der Zapfen 90 besitzt eine Bohrung, durch die sich der Gelenkstift ebenfalls hindurch erstreckt.

Die Querstempel 6 sind jeweils in einem Führungselement 65 geführt, welches an einer Abflachung 64 der Außenwand eines Heizkastens 71 befestigt ist. Der Heizkasten 71 umschließt eine Heizkammer 72 innerhalb welcher eine aus Heizdrähten 78 bestehende Heizung 57 die Pressform umgebend angeordnet ist, vgl. Figuren 11 und 12. Die Querstempel 6 erstrecken sich durch Öffnungen 75 des Heizkastens 71 in das Innere der Heizkammer 72 hinein, siehe Figur 10. In Figur 10 ist das Oberteil 8 der Pressform entfernt, sodass der Blick auf das Unterteil 9 der Pressform frei ist, auf welchem die Querstempel 6 lagern.

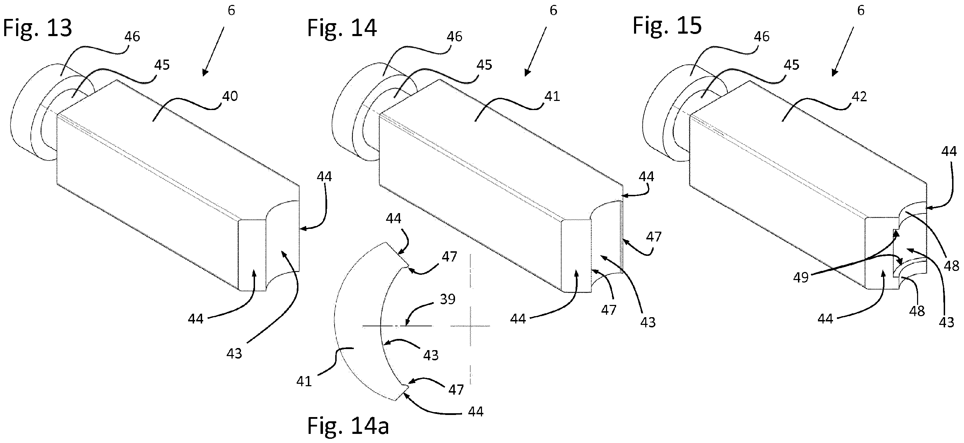

Die Querstempel 6 sind jeweils aus einem Stempelträger 70 und einem Stempelkörper 40, 41, 42 gebildet, von dem Ausführungsvarianten in den Figuren 13 bis 15 dargestellt sind. Der Stempelkörper 40, 41, 42 ist lösbar an dem Stempelträger 70 befestigt. Diese Befestigung erfolgt an einem radialen Ende des Stempelträgers 70, wohingegen das andere Ende den Zapfen 90 aufweist, mit dem der Stempelträger 70 über das Kniegelenk 66 mit dem Kniehebel 64 verbunden ist. In dem Führungselement 65 ist lediglich der Stempelträger 70 geführt, wobei sein Befestigungsende innerhalb der Heizkammer 72 liegt, um ein einfaches Entfernen der Stempelkörper 40, 41, 42 zu ermöglichen.

Figur 10 zeigt die erfindungsgemäße Pressvorrichtung 50 mit eingefahrenen Querstempeln 6, wobei der Mittelstift 7 über den Querstempeln 6 axial vorsteht, wie dies in Bild D von Figur 5 ebenfalls zu sehen ist.

Figur 11 veranschaulicht den Anfangs- und Endzustand der Schwenkbewegung der Pressvorrichtung 50 in einer überlagerten Darstellung, wobei in der Mitte der Vorrichtung 50 der kreuzförmige Rohling 2 mit seinen Vorsprünge 21 erkennbar ist. Die Querstempel 6 sind hier noch nicht ineinander gefahren.

Ein Verschwenken des Drehgestells 54 bewirkt, dass sich die Achse des Gelenkbolzens 67 entlang einer Kreisbahn bewegt, sodass sich der Abstand zur stationären Lagerung eines Querstempels 6 in dem entsprechenden Führungselement 65 vergrößert. Dies führt dazu, dass der Kniehebel 64 um den Gelenkbolzen 67 schwenkt und dabei -je nach Bewegungsrichtung- den Querstempel 6 aus der Führung 65 herauszieht oder in diese hineinschiebt. Für das radiale Fließpressen bewegen sich somit die Hubkolben 61 aus den Hubzylindern 53 heraus und verschwenken das Drehgestell 54 von einer Anfangsposition, die in Bild D von Figur 5 gezeigt ist, um den Winkel α in eine Endposition. Der Schwenkwinkel α wird dadurch in einen linearen Hub der Höhe H umgewandelt. Während der Schwenkbewegung bewegen sich die Querstempel 6 bzw. der jeweilige Stempelkörper 40, 41, 42 zunehmend entlang der Querpressachse 39 auf die Rohlingachse 27 zu und verformen dabei die Vorsprünge 21 des Rohlings 2 derart, dass sie in Umgangsrichtung fließen, insbesondere auch in axialer Richtung. In der Endposition sind die Querstempel 6 vollständig eingefahren und liegen derart benachbart zueinander und aneinander an, dass ihre Pressflächen 43 vollständig die Außenkontur der Endform 3 bilden, siehe Fig. 10.

Figur 12 zeigt einen axialen Querschnitt durch eine erfindungsgemäße Pressvorrichtung 50. In dieser Darstellung umfasst das Drehgestell 54 auch die Oberplatte 56, das Oberteil 8 der Pressform 8, 9 sowie die Abstandsplatte 52 und die Deckplatte 91, wie sie in Figur 5 dargestellt sind. Der Oberstempel 4 erstreckt sich durch eine Bohrung 92 in der Abdeckplatte 91 in die Pressform 8, 9 hinein. Ferner ist in Figur 12 erkennbar, dass das Drehgestell 54 auf der Unterseite seiner Unterplatte 55 Führungsnuten 82 aufweist, in denen Gleitschuhe 81 einliegen. Die Gleitschuhe 81 bilden eine Auflage für das Drehgestell 54 und sind aus Bronze hergestellt. Die Führungsnuten 82 sind Abschnitte einer Kreisbahn oder bilden eine einzige kreisförmige Führungsnut. Die Pressform 8, 9 ruht auf einem Aufstandsring 83, der sich auf einer Tragplatte 80 abstützt. Auf dieser Tragplatte 80 stützen sich auch die Gleitschuhe 81 sowie der Heizkasten 71 ab. Die Tragplatte 80 weist eine zentrale Bohrung 84 auf, durch die sich der Unterstempel 5 hindurch erstreckt. Das dem Oberstempel 4 gegenüberliegende Axialende des Unterstempels 5 ist in einer Unterstempelhalterung 85 aufgenommen, wobei Vorsprünge dieser Halterung 85 in die in Figur 6 erkennbaren Ausnehmungen 37 des Unterstempels 5 formschlüssig eingreifen. Unterhalb der Tragplatte 80 befindet sich eine Kühlplatte 87 mit Kühlkanälen, um die Vorrichtung nach einem Pressvorgang abzukühlen. Figur 12 lässt ferner erkennen, dass die Pressvorrichtung 50 ist in einem Pressgestell 88 montiert ist.

Drei unterschiedliche Ausführungen von Stempelkörpern 40, 41, 42 sind in den Figuren 13 bis 15 dargestellt. Sie unterscheiden sich lediglich in der Ausgestaltung der Pressfläche 43, die zur bestimmungsgemäßen Umformung der Vorsprünge 21 vorgesehen ist. Die Stempelkörper 40, 41, 42 besitzen beispielhaft einen rechteckigen, insbesondere quadratischen Querschnitt und eine insgesamt längliche Gestalt, wobei die Pressfläche 43 an einem axialen Ende des Stempelkörpers 40, 41, 42 ausgebildet ist. Am anderen Axialende besitzen die Stempelkörper 40, 41, 42 einen Fortsatz 45 runden Querschnitts, der von der Außenkontur des Stempelkörpers 40, 41, 42 zurückspringt, d.h. eine geringere Abmessung aufweist. Der Fortsatz 45 erweitert sich jedoch in einem Abstand zum Stempelkörper 40, 41, 42 stufenartig derart, dass der Fortsatz 45 eine pilzkopfartige Erweiterung 46 aufweist. Auch diese Erweiterung 46 ist im Querschnitt rund, und steht nicht radial über die Außenflächen des Stempelkörpers 40, 41, 42 hervor. Der Stempelkörper 40, 41, 42 ist einstückig mit dem Fortsatz 45 und der pilzkopfartigen Erweiterung 46. Diese Ausgestaltung des der Pressform abgewandten Endes des Stempelkörpers 40, 41, 42 der Querstempel 6 dient der schnellen und einfachen Auswechselbarkeit, wobei der Fortsatz 45 und die Erweiterung 46 vorgesehen ist, in der Tasche 73 des Stempelträgers 70 formschlüssig einzuliegen, vergleiche Figur 12. Eine solche Tasche 73 ist an dem zur Pressform gerichteten Ende des Stempelträgers 70 ausgebildet. Dabei ist die Tasche 73 zur Pressform hin geöffnet, damit sich der Fortsatz 45 aus der Tasche 73 radial heraus erstrecken kann. Ferner ist die Tasche 73 in axialer Richtung zur Abdeckplatte 91 hin geöffnet, um den Stempelkörper 40, 41, 42 axial in die Tasche 73 einsetzen zu können.

Die Pressfläche 43 entspricht in der Ausführungsvariante gemäß Figur 13 in ihrer gesamten axialen Höhe dem Abschnitt eines Kreiszylindermantels. In jede Umfangsrichtung ist die Pressfläche 43 durch jeweils eine ebene Seitenflanke 44 begrenzt, welche in einem Winkel von 45° zur Längsachse des Stempelkörpers 40 liegt. Die zueinander gerichteten Seitenflanken 44 benachbarter Querstempel 6 liegen im eingefahrenen Zustand aneinander an und bilden somit einen geschlossenen Ring, wie dies in Figur 10 zu sehen ist.

Bei der Verformung der Vorsprünge 21 kann es vorkommen, dass umgeformtes Material des Rohlings 2 zwischen benachbarte Pressstempel, genauer gesagt zwischen gegenüberliegende Seitenflanken 44 benachbarter Querpressstempel 6 gelangt, wodurch einerseits ein Grad entsteht, andererseits die Querstempel 6 nicht vollständig einfahren können. Um einen solchen Grad zu vermeiden, zeigt die Ausführungsvariante des Stempelkörpers 41 gemäß Figur 14 eine Verlängerung der Seitenflanken 44 derart, dass sich entlang der Kanten, die die Pressfläche 43 in Umfangsrichtung begrenzen, jeweils ein Kantenvorsprung 47 erstreckt. Wie die Vergrößerung des Axialendes des Stempelkörpers 41 in Figur 14a zeigt, sind die beiden Kantenvorsprünge 47 nasenförmig, mit anderen Worten im Querschnitt etwa dreieckig. Sie bewirken, dass am Ende des Querfließpressens eine Umlenkung der außenliegenden Volumenanteile radial nach innen erfolgt, so dass das Magnetmaterial des Rohlings 2 von den Seitenflanken 44 abgehalten wird. In der Endform 3 bildet sich infolge der Kantenvorsprünge 47 eine Längsrille. Diese dient gleichzeitig als Markierung des Fließwegendes. Da das ungeformte Materialvolumen an dieser Stelle am längsten geflossen ist, ist hier die radiale Vorzugsorientierung nahezu perfekt, so dass sich diese Umfangsabschnitte besonders dafür eignen, hier einen Nord- oder Südpol vorzusehen.

Eine dritte Ausführungsvariante eines Stempelkörpers 42 ist in Figur 15 gezeigt. Bei dieser Ausführungsvariante weist die Pressfläche 43 an ihrem oberen und unteren Axialende jeweils einen stufenförmigen, radialen Vorsprung 48 auf, der eine axiale Flussbegrenzung 49 für den umzuformenden Rohling 2 bildet. Dies verhindert, dass Material des Rohlings 2 zwischen den Oberstempel 4 und das Oberteil 8 der Pressform sowie zwischen den Unterstempel 5 und das Unterteil 9 der Pressform gelangt, was dort ebenfalls einerseits zu Graten, andererseits infolge der Stempelbewegungen zum Verschleiß der Stempel und Pressform führen kann.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls" oder "geeignet" angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen. Die Erfindung wird in den Ansprüchen definiert.

### Bezugszeichenliste

- 1: Pulverpressling
- 2: Rohling
- 3: Endform
- 4: Oberstempel der Pressform
- 5: Unterstempel der Pressform
- 6: Querstempel
- 7: Mittelstift
- 8: Oberteil
- 9: Unterteil
- 10: Längspressachse
- 11: Vorsprung von Pulverpressling
- 12: Zwischenabschnitt, Sektorabschnitt eines zentralen Rings
- 13: Außenkontur
- 14: Hohlraum
- 15: Zwischenbereich
- 16: Innenkontur
- 17: Presslingsachse
- 21: Vorsprung von Rohling
- 22: Zwischenabschnitt, Sektorabschnitt eines zentralen Rings
- 23: Außenkontur
- 24: Hohlraum
- 25: Zwischenbereich
- 26: Innenkontur
- 27: Rohlingachse
- 30: Permanentmagnet
- 31: Vorsprung von Unterstempel
- 32: Zwischenabschnitt, Sektorabschnitt eines zentralen Rings
- 33: Außenkontur
- 34: Hohlraum
- 35: Zwischenbereich
- 36: Innenkontur
- 37: Ausnehmung
- 38: Magnetisierung
- 39: Querpressachse
- 40 - 42: Stempelkörper
- 43: Pressfläche
- 44: Seitenflanken
- 45: Fortsatz
- 46: Erweiterung, radial pilzkopfartig
- 47: Kantenvorsprung
- 48: Radialer Stufenvorsprung
- 49: Axialflussbegrenzungen
- 50: Pressvorrichtung
- 51: Sackbohrung
- 52: Abstandsplatte
- 53: Hydraulikzylinder, Hubzylinder
- 54: Drehgestell
- 55: Unterplatte von Drehgestell
- 56: Oberplatte von Drehgestell
- 57: Heizung
- 58: oberer hohler Ringraum (Leeres Ausweichvolumen)
- 59: unterer hohler Ringraum (Leeres Ausweichvolumen)
- 60: Abstandshalter
- 61: Hubkolben
- 62: Gelenköse
- 63: Bolzen
- 64: Kniehebel
- 65: Führungselement
- 66: Kniegelenk
- 67: Gelenkbolzen
- 68: Oberer Vorsprung (der gabelartigen Aufnahme)
- 69: Unterer Vorsprung (der gabelartigen Aufnahme)
- 70: Stempelträger
- 71: Heizkasten
- 72: Heizkammer
- 73: Tasche
- 74: Abflachung
- 75: Öffnung
- 76: Erweiterung
- 77: Erweiterung
- 78: Heizdraht
- 79: Spalt
- 80: Tragplatte
- 81: Gleitschuh, Bronze, bildet Auflage für Drehgestell
- 82: Führungsnut
- 83: Aufstandsring
- 84: Bohrung
- 85: Unterstempelhalterung
- 86: Befestigungsstück
- 87: Kühlplatte
- 88: Gestell
- 90: Zapfen
- 91: Abdeckplatte
- 92: Bohrung

## Patentansprüche

1. Verfahren zur Herstellung eines rotationssymmetrischen, insbesondere ringförmigen Permanentmagneten (30) mit radial vorzugsgerichteter Magnetisierung (38) durch Fließpressen eines Rohlings (2) aus Magnetmaterial, **dadurch gekennzeichnet, dass** das Fließpressen quer zur Rohlingachse (27) erfolgt, indem Querstempel (6) Vorsprünge (21) des Rohlings (2) derart verformen, dass das die Vorsprünge (21) bildende Materialvolumen in Umfangsrichtung fließt.

2. Verfahren nach Anspruch 1, **dadurch gekennzeichnet, dass** der Rohling (2) einen Hohlkörper bildet.

3. Verfahren nach Anspruch 1 oder 2, **dadurch gekennzeichnet, dass** der Rohling (2) vier Vorsprünge (21) aufweist.

4. Verfahren nach einem der vorherigen Ansprüche, **dadurch gekennzeichnet, dass** die Vorsprünge einen blockförmigen Querschnitt aufweisen.

5. Verfahren nach einem der vorherigen Ansprüche, **dadurch gekennzeichnet, dass** die Vorsprünge (21) eine konvex-bogenförmige Außenkontur (23) aufweisen.

6. Verfahren nach einem der vorherigen Ansprüche, **dadurch gekennzeichnet, dass** der fließgepresste Rohling (2) einem elektromagnetischen Feld ausgesetzt wird, während seine Winkelausrichtung relativ zum Feld derart ist, dass die magnetischen Pole des Feldes auf den ehemaligen Vorsprüngen (21) liegen.

7. Verfahren nach einem der vorherigen Ansprüche, **dadurch gekennzeichnet, dass** der Rohling (2) aus einem Pulverpressling (1) identischen Querschnitts durch axiales Pressen hergestellt ist.

8. Verfahren nach Anspruch 7, **dadurch gekennzeichnet, dass** das axiale Pressen in einer Pressform (8, 9) einer Pressvorrichtung (50) mittels eines Oberstempels (4) und eines Unterstempels (5) erfolgt, die relativ zueinander axial bewegt werden, während der Pulverpressling (1) zwischen ihnen liegt, wobei die Pressform (8, 9) einen Innenraum aufweist, der die Außenkontur des Rohlings (2) definiert.

9. Verfahren nach Anspruch 8, **dadurch gekennzeichnet, dass** das axiale Pressen auf einer ersten axialen Höhe (H1) der Pressvorrichtung (50) erfolgt, und dass der Rohling (2) anschließend auf eine zweite Höhe (H2) in der Pressvorrichtung (50) verfahren wird, auf der die Querstempel (6) den Rohling (2) quer zur Rohlingachse (27) fließpressen.

10. Verfahren nach Anspruch 8 oder 9, **dadurch gekennzeichnet, dass** der Rohling (2) und der Ober- und/ oder Unterstempel (4, 5) vor dem Fließpressen relativ zueinander derart positioniert werden, dass der Rohling (2) am Oberstempel (4) und am Unterstempel (5) anliegt, und dass der Rohling (2) auch während des Fließpressens am Oberstempel (4) und am Unterstempel (5) anliegt.

11. Verfahren nach Anspruch 8 oder 9, **dadurch gekennzeichnet, dass** der Rohling (2) und der Ober- und/ oder Unterstempel (4, 5) vor dem Fließpressen relativ zueinander derart positioniert werden, dass zwischen dem Rohling (2) und wenigstens einem der beiden Stempel (4, 5) ein einen Hohlraum (58, 59) bildender Abstand besteht.

12. Verfahren nach einem der Ansprüche 8 bis 11, **dadurch gekennzeichnet, dass** der Rohling (2) und der Ober- und/ oder Unterstempel (4, 5) vor dem Fließpressen relativ zueinander derart positioniert werden, dass der Oberund/ oder der Unterstempel (4, 5) eine axiale Begrenzung für das beim Fließpressen des Rohlings (2) fließende Magnetmaterial bildet/ bilden.

13. Verfahren nach einem der Ansprüche 8 bis 12, **dadurch gekennzeichnet, dass** ein Mittelstift (7) axial bewegbar im Ober- und/ oder Unterstempel (4, 5) geführt ist, der die Innenkontur (26) des Rohlings (2) definiert und den Rohling (2) für das Fließpressen positioniert und/ oder zumindest vor dem Fließpressen in Position hält.

14. Verfahren nach einem der vorherigen Ansprüche, **dadurch gekennzeichnet, dass** die Querstempel (6) beim Fließpressen jeweils von einem mit einem schwenkbaren Drehgestell (55, 56) gelenkig verbundenen Kniehebel (64) bewegt werden, mit dem sie über ein Kniegelenk (66) verbunden sind.

15. Pressvorrichtung (50) zur Herstellung eines rotationssymmetrischen, insbesondere ringförmigen Permanentmagneten (30) mit radial vorzugsgerichteter Magnetisierung (38) durch Fließpressen eines Rohlings (2) aus Magnetmaterial, **gekennzeichnet durch** quer zur Rohlingachse (27) geführte bewegliche Querstempel (6), wobei die Pressvorrichtung (50) eingerichtet ist, Vorsprünge (21) des Rohlings (2) durch die Bewegung der Querstempel (6) derart zu verformen, dass das die Vorsprünge (21) bildende Materialvolumen in Umfangsrichtung fließt.

16. Pressvorrichtung (50) nach Anspruch 15, **dadurch gekennzeichnet, dass** die Anzahl der Querstempel (6) der Anzahl der Vorsprünge (21) entspricht, wobei jeder Querstempel (6) zum Fließpressen eines der Vorsprünge (21) vorgesehen ist.

17. Pressvorrichtung (50) nach Anspruch 15 oder 16, **gekennzeichnet durch** eine Pressform (8, 9) und einen darin geführten Ober- und Unterstempel (4, 5), die relativ zueinander axial beweglich sind, um den Rohling (2) durch axiales Pressen in der Pressform (8, 9) aus einem Pulverpressling herzustellen, wobei der Querschnitt des Ober- und /oder Unterstempels (4, 5) dem Querschnitt des Rohlings (2) entspricht.

18. Pressvorrichtung (50) nach Anspruch 17, **dadurch gekennzeichnet, dass** der Unterstempel (5) ein Hohlprofil bildet, in dem ein Mittelstift (7) längsbeweglich geführt ist, der dafür vorgesehen ist, während des Fließpressens in einem zentralen Hohlraum (24) des Rohlings (2) einzuliegen.

19. Pressvorrichtung (50) nach Anspruch 18, **dadurch gekennzeichnet, dass** der Mittelstift (7) einen von der Kreisform abweichenden Querschnitt und der Hohlraum (24) des Rohlings (2) einen hierzu korrespondierenden Querschnitt aufweist.

20. Pressvorrichtung (50) nach einem der Ansprüche 17 bis 19, **dadurch gekennzeichnet, dass** das axiale Pressen in der Pressform (8,9) axial versetzt zu den Querstempeln (6) erfolgt.

21. Pressvorrichtung (50) nach einem der Ansprüche 15 bis 20, **dadurch gekennzeichnet, dass** die Querstempel (6) jeweils über ein Kniegelenk (66) mit einem Kniehebel (64) verbunden sind, der gelenkig an einem schwenkbaren Drehgestell (55, 56) befestigt ist.

22. Pressvorrichtung (50) nach Anspruch 21, **dadurch gekennzeichnet, dass** tangential am Drehgestell (55, 56) zumindest ein Hubkolben (61) eines Hubzylinders (53) angreift, um das Drehgestell (55, 56) durch eine Linearbewegung des Hubkolbens (61) zu drehen.

23. Pressvorrichtung (50) nach einem der Ansprüche 15 bis 22, **dadurch gekennzeichnet, dass** die Pressflächen (43) der Querstempel (6) an ihren beiden Umfangsenden jeweils einen längserstreckenden, nasenartigen Kantenvorsprung (47) aufweisen.

24. Pressvorrichtung (50) nach einem der Ansprüche 12 bis 23, **dadurch gekennzeichnet, dass** die Pressflächen (43) der Querstempel (6) an ihren beiden Axialenden jeweils einen radialen Stufenvorsprung (48) aufweisen, der sich in Umfangsrichtung erstreckt.

25. Pressvorrichtung (50) nach einem der Ansprüche 15 bis 24, **dadurch gekennzeichnet, dass** die Querstempel (6) jeweils einen wechselbaren, die Pressfläche (43) bereitstellenden Stempelkörper (40, 41, 42) und einen mit dem Kniehebel (64) gelenkig verbundenen Stempelträger (70) aufweisen, der den Stempelkörper (40) trägt.

26. Rohling (2) aus gepresstem Magnetmaterial, der bestimmungsgemäß vorgesehen ist, durch Fließpressen in eine Endform (3) umgeformt zu werden, zur Verwendung in dem Verfahren nach einem der Ansprüche 1 bis 14 in einer Vorrichtung nach einem der Ansprüche 15 bis 25, wobei der Rohling (2) Vorsprünge (21) aufweist zur bestimmungsgemäßen Umformung in die Endform durch quer zur Rohlingachse (27) gerichtetes Fließpressen derart, dass das die Vorsprünge (21) bildende Materialvolumen in Umfangsrichtung fließt.

## Claims

1. Method for the production of a rotationally symmetrical, notably annular permanent magnet (30) with radially oriented magnetisation (38) through the extrusion of a blank (2) made of magnet material, **characterised by** extrusion transverse to the axis of the blank (27) by means of transversal male moulds (6) that deform protrusions (21) of the blank (2) so that the material volume forming the protrusions (21) flows in the circumferential direction.

2. Method according to claim 1, **characterised by** the blank (2) forming a hollow body.

3. Method according to claim 1 or 2, **characterised by** the blank (2) having four protrusions (21).

4. Method according to one of the preceding claims, **characterised by** the protrusions having a block-shaped cross-section.

5. Method according to one of the preceding claims, **characterised by** the protrusions (21) having a convex curved outer contour (23).

6. Method according to one of the preceding claims, **characterised by** the extruded blank (2) being exposed to an electromagnetic field while its angular orientation relative to the field is such that the field's magnetic poles lie on the former protrusions (21).

7. Method according to one of the preceding claims, **characterised by** the blank (2) being made of a pressed powder pellet (1) with an identical cross-section by means of axial pressing.

8. Method according to claim 7, **characterised by** the axial pressing taking place in a press mould (8, 9) of a press unit (50) by means of an upper stamp (4) and a lower stamp (5) that are moved axially relative to each other while the pressed powder pellet (1) lies between them, in which the press mould (8, 9) has an interior space that defines the outer contour of the blank (2).

9. Method according to claim 8, **characterised by** the axial pressing taking place on a first axial level (H1) of the press unit (50) and the blank (2) subsequently being moved to a second level (H2) in the press unit (50) on which the transversal male moulds (6) extrude the blank (2) transversal to the axis of the blank (27).

10. Method according to claim 8 or 9, **characterised by** the blank (2) and the upper and/or lower stamp (4, 5) being positioned relative to each other prior to extrusion so that the blank (2) contacts the upper stamp (4) and the lower stamp (5) and the blank (2) remains in contact with the upper stamp (4) and the lower stamp (5) during extrusion.

11. Method according to claim 8 or 9, **characterised by** the blank (2) and the upper and/or lower stamp (4, 5) being positioned relative to each other prior to extrusion so that there is a space forming a cavity (58, 59) between the blank (2) and at least one of the two stamps (4, 5).

12. Method according to one of the claims 8 through 11, **characterised by** the blank (2) and the upper and/or lower stamp (4, 5) being positioned relative to each other prior to extrusion so that the upper and/or lower stamp (4, 5) form(s) an axial limiter for the magnet material that flows during the extrusion of the blank (2).

13. Method according to one of the claims 8 through 12, **characterised by** an axially moveable centre pin (7) being guided in the upper and/or lower stamp (4, 5), defining the inner contour (26) of the blank (2) and positioning the blank (2) for extrusion, and/or at least holding it in position prior to extrusion.

14. Method according to one of the preceding claims, **characterised by** the transversal male moulds (6) respectively being connected by a hinged joint (66) to a toggle lever (64) connected by an articulated joint to a swivelling bogie (55, 56) that moves them during extrusion .

15. Press unit (50) for the production of a rotationally symmetrical, notably annular permanent magnet (30) with radially oriented magnetisation (38) through the extrusion of a blank (2) made of magnet material, **characterised by** moveable transversal male moulds (6) guided transverse to the axis of the blank (27), in which the press unit (50) is configured to deform protrusions (21) of the blank (2) through the movement of the transversal male moulds (6) so that the material volume forming the protrusions (21) flows in the circumferential direction.

16. Press unit (50) according to claim 15, **characterised by** the number of transversal male moulds (6) corresponding to the number of protrusions (21), in which each transversal male mould (6) is intended for the extrusion of one of the protrusions (21).

17. Press unit (50) according to claim 15 or 16, **characterised by** a press mould (8, 9) and an upper and lower stamp guided within it (4, 5) that are axially moveable relative to each other in order to produce the blank (2) through axial pressing in the press mould (8, 9) from a pressed powder pellet, in which the cross-section of the upper and/or lower stamp (4, 5) corresponds to the cross-section of the blank (2).

18. Press unit (50) according to claim 17, **characterised by** the lower stamp (5) forming a hollow section in which the centre pin (7), intended to engage in a central cavity (24) of the blank (2) during extrusion, is guided so it can move in the longitudinal direction.

19. Press unit (50) according to claim 18, **characterised by** the centre pin (7) having a non-circular cross-section and the cavity (24) of the blank (2) having a corresponding cross-section.

20. Press unit (50) according to one of the claims 17 through 19, **characterised by** the axial pressing taking place in the press mould (8, 9), axially offset relative to the transversal male moulds (6).

21. Press unit (50) according to one of the claims 15 through 20, **characterised by** the transversal male moulds (6) respectively being connected to a toggle lever (64) by a hinged joint (66), which is connected by an articulated joint to a swivelling bogie (55, 56).

22. Press unit (50) according to claim 21, **characterised by** at least one piston (61) of a lifting cylinder (53) engaging tangentially on the bogie (55, 56) in order to swivel the bogie (55, 56) through a linear movement of the lifting cylinder (61).

23. Press unit (50) according to one of the claims 15 through 22, **characterised by** the contact surfaces (43) of the transversal male moulds (6) respectively having a longitudinal lug-like edge protrusion (47) on their two perimeter ends.

24. Press unit (50) according to one of the claims 12 through 23, **characterised by** the contact surfaces (43) of the transversal male moulds (6) respectively having a radial stepped protrusion (48) extending in the circumferential direction on their two axial ends.

25. Press unit (50) according to one of the claims 15 through 24, **characterised by** the transversal male moulds (6) respectively having an exchangeable stamp body (40, 41, 42) providing the contact surface (43) and a stamp carrier (70) connected to the toggle lever (64) by an articulated joint that carries the stamp body (40).

26. Blank (2) made of pressed magnet material, intended for deformation by means of extrusion to create a final shape (3), for use with the method according to one of the claims 1 through 14 in a fixture according to one of the claims 15 through 25, in which the blank (2) has protrusions (21) intended for deformation to create the final shape through extrusion transverse to the blank axis (27) so that the material volume forming the protrusions (21) flows in the circumferential direction.

## Revendications

1. Procédé de fabrication d'un aimant permanent (30) à symétrie de rotation, particulièrement de forme annulaire, avec une aimantation (38) orientée radialement de manière préférentielle, par extrusion d'une pièce brute (2) en matériau magnétique, **caractérisé en ce que** l'extrusion s'effectue transversalement à l'axe (27) de la pièce brute, **en ce que** des poinçons transversaux (6) déforment des saillies (21) de la pièce brute (2) pour que le volume de matériau formant les saillies (21) s'écoule dans la direction circonférentielle.

2. Procédé selon la revendication 1, **caractérisé en ce que** la pièce brute (2) forme un corps creux.

3. Procédé selon la revendication 1 ou 2, **caractérisé en ce que** la pièce brute (2) présente quatre saillies (21).

4. Procédé selon une des revendications précédentes, **caractérisé en ce que** les saillies présentent une section transversale en forme de bloc.

5. Procédé selon l'une des revendications précédentes, **caractérisé en ce que** les saillies (21) présentent un contour extérieur (23) en forme d'arc convexe.

6. Procédé selon l'une des revendications précédentes, **caractérisé en ce que** la pièce brute extrudée (2) est soumise à un champ électromagnétique, tandis que son orientation angulaire par rapport au champ est telle que les pôles magnétiques du champ sont situés sur les anciennes saillies (21).

7. Procédé selon l'une des revendications précédentes **caractérisé en ce que** la pièce brute (2) est fabriquée par pressage axial à partir d'un bloc de poudre comprimée (1) de section transversale identique.

8. Procédé selon la revendication 7, **caractérisé en ce que** le pressage axial est effectué dans le moule de pressage (8, 9) d'un dispositif de pressage (50) au moyen d'un poinçon supérieur (4) et d'un poinçon inférieur (5) déplacés axialement l'un par rapport à l'autre tandis que le bloc de poudre comprimée (1) est situé entre eux, le moule de pressage (8, 9) présentant un espace intérieur définissant le contour extérieur de la pièce brute (2).

9. Procédé selon la revendication 8, **caractérisé en ce que** le pressage axial est effectué à une première hauteur axiale (H1) du dispositif de pressage (50), et que la pièce brute (2) est ensuite déplacée à une deuxième hauteur (H2) dans le dispositif de pressage (50) au niveau de laquelle les poinçons transversaux (6) extrudent la pièce brute (2) par impact transversalement à l'axe (27) de la pièce brute.

10. Procédé selon la revendication 8 ou 9, **caractérisé en ce que** la pièce brute (2) et le poinçon supérieur et/ou inférieur (4, 5) sont positionnés l'un par rapport à l'autre avant l'extrusion pour que la pièce brute (2) soit positionnée contre le poinçon supérieur (4) et le poinçon inférieur (5), et que la pièce brute (2) soit aussi positionnée contre le poinçon supérieur (4) et le poinçon inférieur (5) pendant l'extrusion.

11. Procédé selon la revendication 8 ou 9, **caractérisé en ce que** la pièce brute (2) et le poinçon supérieur et/ou inférieur (4, 5) sont positionnés l'un par rapport à l'autre avant l'extrusion pour créer entre la pièce brute (2) et au moins un des deux poinçons (4, 5) un écart formant une cavité (58, 59).

12. Procédé selon l'une des revendications 8 à 11, **caractérisé en ce que** la pièce brute (2) et le poinçon supérieur et/ou inférieur (4, 5) sont positionnés l'un par rapport à l'autre avant l'extrusion pour que le poinçon supérieur et/ou inférieur (4, 5) forme(nt) une limite axiale pour le matériau magnétique s'écoulant lors de l'extrusion de la pièce brute (2).

13. Procédé selon l'une des revendications 8 à 12, **caractérisé en ce qu'**une tige centrale (7) mobile guidée axialement dans le poinçon supérieur et/ou inférieur (4, 5) définit le contour intérieur (26) de la pièce brute (2) et positionne la pièce brute (2) pour l'extrusion et/ou la maintient en position au moins avant l'extrusion.

14. Procédé selon l'une quelconque des revendications précédentes, **caractérisé en ce que,** lors de l'extrusion, les poinçons transversaux (6) sont déplacés chacun par un levier basculant (64) articulé à une base pivotante (55, 56) auquel ils sont reliés par une articulation à genouillère (66).

15. Dispositif de pressage (50) pour la fabrication d'un aimant permanent (30) à symétrie de rotation, particulièrement de forme annulaire, avec une aimantation (38) orientée radialement de manière préférentielle, par extrusion d'une pièce brute (2) en matériau magnétique, **caractérisé par** des poinçons transversaux mobiles (6) guidés transversalement à l'axe (27) de la pièce brute, sachant que le dispositif de pressage (50) est conçu pour déformer des saillies (21) de la pièce brute (2) par le mouvement des poinçons transversaux (6) pour que le volume de matériau formant les saillies (21) s'écoule dans la direction périphérique.

16. Dispositif de pressage (50) selon la revendication 15, **caractérisé en ce que** le nombre de poinçons transversaux (6) correspond au nombre de saillies (21), sachant que chaque poinçon transversal (6) est prévu pour l'extrusion de l'une des saillies (21).

17. Dispositif de pressage (50) selon la revendication 15 ou 16, **caractérisé par** un moule de pressage (8, 9) ainsi qu'un poinçon supérieur et un poinçon inférieur (4, 5) guidés dans celui-ci et mobiles axialement l'un par rapport à l'autre, afin de fabriquer la pièce brute (2) par pressage axial dans le moule de pressage (8, 9) à partir d'un bloc de poudre comprimée, la section transversale du poinçon supérieur et/ou du poinçon inférieur (4, 5) correspondant à la section transversale de la pièce brute (2).

18. Dispositif de pressage (50) selon la revendication 17, **caractérisé en ce que** le poinçon inférieur (5) forme un profilé creux dans lequel est guidée longitudinalement une tige centrale (7) destinée à s'insérer dans une cavité centrale (24) de la pièce brute (2) pendant l'extrusion.

19. Dispositif de pressage (50) selon la revendication 18, **caractérisé en ce que** la tige centrale (7) présente une section transversale différente de la forme circulaire et que la cavité (24) de la pièce brute (2) présente une section transversale correspondante.

20. Dispositif de pressage (50) selon l'une des revendications 17 à 19, **caractérisé en ce que** le pressage axial dans le moule de pressage (8,9) est décalé axialement par rapport aux poinçons transversaux (6).

21. Dispositif de pressage (50) selon l'une des revendications 15 à 20, **caractérisé en ce que** les poinçons transversaux (6) sont reliés chacun par une articulation à genouillère (66) à un levier basculant (64) fixé de manière articulée à une base pivotante (55, 56).

22. Dispositif de pressage (50) selon la revendication 21, **caractérisé en ce qu'**au moins un piston de levage (61) d'un vérin de levage (53) s'engage tangentiellement sur la base pivotante (55, 56) pour faire tourner la base pivotante (55, 56) par un mouvement linéaire du piston de levage (61).

23. Dispositif de pressage (50) selon l'une des revendications 15 à 22, **caractérisé en ce que** les surfaces de pressage (43) des poinçons transversaux (6) présentent chacune, à leurs deux extrémités périphériques, un bord saillant (47) longitudinal en forme de nez.

24. Dispositif de pressage (50) selon l'une des revendications 12 à 23, **caractérisé en ce que** les surfaces de pressage (43) des poinçons transversaux (6) présentent à leur extrémités axiales chacune une saillie étagée radiale (48) s'étendant dans la direction circonférentielle.

25. Dispositif de pressage (50) selon l'une des revendications 15 à 24, **caractérisé en ce que** les poinçons transversaux (6) présentent chacun un corps de poinçon (40, 41, 42) interchangeable, fournissant la surface de pressage (43), et un porte-poinçon (70) relié de manière articulée au levier basculant (64) portant le corps de poinçon (40).

26. Pièce brute (2) en matériau magnétique pressé destinée à être transformée par extrusion en une forme finale (3), destinée à être utilisée dans le procédé selon l'une des revendications 1 à 14 dans un dispositif selon l'une des revendications 15 à 25, sachant que la pièce brute (2) comporte des saillies (21) destinées à être transformées par extrusion dans la forme finale, de manière transversale à l'axe (27) de la pièce brute, pour que le volume de matériau constituant les saillies (21) s'écoule dans la direction circonférentielle.
